# EUROPEAN PATENT APPLICATION

(11) **EP 3 217 314 A1**
(43) Date of publication of application: **13.09.2017**
(21) Application number: 15856194.4
(22) Date of filing: 06.11.2015
(51) Int. Cl.: G06K 7/00

(54) **CONTAINER NUMBER RECOGNITION METHOD AND SYSTEM**

(30) Priority: 06.11.2014 CN 201410643618; 06.11.2014 CN 201410638505
(71) Applicant: Nuctech Company Limited, Beijing 100084 (CN)
(72) Inventor: WANG, Yongming, Beijing 100084 (CN); XU, Yanwei, Beijing 100084 (CN); YU, Weifeng, Beijing 100084 (CN)
(74) Representative: Isarpatent
(86) International application number: PCT/CN2015/093986
(87) International publication number: WO 2016/070842

(57) **Abstract**

The present disclosure provides a method of identifying a container number, including: arranging an image acquiring device along a passageway through which a container will pass, the image acquiring device comprising a trigger unit and a plurality of image acquiring units, at least two image acquiring units of the plurality of image acquiring units being adapted to respectively acquire images of the container numbers on at least two surfaces of a plurality of surfaces of the container passing through the passageway; acquiring the images of the container numbers on the at least two surfaces respectively by the at least two image acquiring units based on a signal from the trigger unit; and identifying the container number at least based on the images or data from the at least two image acquiring units about the container number. The present disclosure also relates to a system of identifying a container number.

## Description

### BACKGROUND OF THE INVENTION

### Field of the Invention

Embodiments of the present disclosure relate to detection of a container, and particularly, to a method of identifying a container number and a system of identifying a container number.

### Description of the Related Art

Exiting systems of acquiring and identifying a container number includes a handheld device for manually acquiring an image of the container number and extracting number characters from the image, and a device mounted in a unidirectional passageway for a container truck and automatically acquiring an image of the container number and extracting number characters from the image.

For the device mounted in the unidirectional passageway for the container truck and automatically acquiring the image of the container number and extracting number characters from the image, if the container number is soiled or broken or is blocked or is incomplete, it is often difficult to obtain the correct container number only by performing an operation of automatically acquiring the image of the container number one time (i.e., one capturing operation) on one surface of the container.

### SUMMARY

The present invention has been made to improve accuracy of identifying the container number and to avoid or reduce the problem of being difficult to read the container number due to the container number on the surface corresponding to an image acquiring unit being soiled or broken or being blocked or being incomplete.

According to an aspect of embodiments of the present disclosure, there is provided a method of identifying a container number, comprising steps of:
arranging an image acquiring device along a passageway through which a container will pass, the image acquiring device comprising a trigger unit and a plurality of image acquiring units, at least two image acquiring units of the plurality of image acquiring units being adapted to respectively acquire images of the container numbers on at least two surfaces of a plurality of surfaces of the container passing through the passageway;
acquiring the images of the container numbers on the at least two surfaces respectively by the at least two image acquiring units based on a signal from the trigger unit; and
identifying the container number at least based on the images or data from the at least two image acquiring units about the container number.

Optionally, the images of the container numbers on the at least two surfaces of the plurality of surfaces are respectively acquired by the at least two image acquiring units of the plurality of image acquiring units at different times based on the signal from the trigger unit, and wherein a distance between projections of the at least two image acquiring units in a movement direction of the container relative to the passageway is less than the length of the container.

Further, the at least two image acquiring units are positioned such that a relative position of each of the at least two image acquiring units with respect to a corresponding one of the surfaces of the container is fixed in two opposite movement directions of the container relative to the passageway when acquiring the image of the container number on the corresponding surface.

According to another aspect of embodiments of the present disclosure, there is provided a method of identifying a container number, comprising:
an image acquiring device arranged along a passageway through which a container will pass, the image acquiring device comprising a trigger unit and a plurality of image acquiring units, at least two image acquiring units of the plurality of image acquiring units being adapted to respectively acquire images of the container numbers on at least two surfaces of a plurality of surfaces of the container passing through the passageway; and
number identification device configured to identify the container number at least based on the images or data from the at least two image acquiring units about the container number, wherein
a distance between projections of the at least two image acquiring units in a movement direction of the container relative to the passageway is less than the length of the container.

Further, a relative position of each of the at least two image acquiring units with respect to a corresponding one of the surfaces of the container is fixed in two opposite movement directions when acquiring the image of the container number on the corresponding surface.

### BRIEF DESCRIPTION OF THE DRAWINGS

The above and other features and advantages of the present disclosure can be understood more clearly from the following preferred embodiments described with reference to the accompanying drawings. In the drawings:
Fig. 1 is a flow chart of a method of acquiring a container number according to an embodiment of the present disclosure;
Fig. 2 is a schematic top view of an arrangement of a container number acquisition system according to a first exemplary embodiment of the present disclosure;
Figs. 3a and 3b are process schematic diagrams of acquiring images of the container numbers on a plurality of surfaces of a container by using the container number acquisition system shown in Fig. 2;
Fig. 4 is a schematic top view of an arrangement of a container number acquisition system according to a second exemplary embodiment of the present disclosure;
Figs. 5a and 5b are process schematic diagrams of acquiring images of the container numbers on a plurality of surfaces of a container by using the container number acquisition system shown in Fig. 4;
Fig. 6 is a schematic top view of an arrangement of a container number acquisition system according to a third exemplary embodiment of the present disclosure;
Figs. 7a-d are process schematic diagrams of acquiring images of the container numbers on a plurality of surfaces of a container by using the container number acquisition system shown in Fig. 6;
Fig. 8 is a schematic top view of an arrangement of a container number acquisition system according to a fourth exemplary embodiment of the present disclosure;
Figs. 9a-d are process schematic diagrams of acquiring images of the container numbers on a plurality of surfaces of a container by using the container number acquisition system shown in Fig. 8;
Fig. 10 is a schematic top view of an arrangement of a container number acquisition system according to a fifth exemplary embodiment of the present disclosure;
Figs. 11a and 11b are process schematic diagrams of acquiring images of the container numbers on a plurality of surfaces of a container by using the container number acquisition system shown in Fig. 10;
Fig. 12 is a schematic top view of an arrangement of a container number acquisition system according to a sixth exemplary embodiment of the present disclosure;
Figs. 13a-c are process schematic diagrams of acquiring images of the container numbers on a plurality of surfaces of a container by using the container number acquisition system shown in Fig. 12;
Fig. 14 is a schematic top view of an arrangement of a container number acquisition system according to a seventh exemplary embodiment of the present disclosure;
Figs. 15a-c are process schematic diagrams of acquiring images of the container numbers on a plurality of surfaces of a container by using the container number acquisition system shown in Fig. 14;
Fig. 16a is process schematic diagram of acquiring images of the container numbers on a plurality of surfaces of a container according to an eighth exemplary embodiment of the present disclosure; Fig. 16b is process schematic diagram of acquiring images of the container numbers on a plurality of surfaces of a container according to a variation of the eighth exemplary embodiment of the present disclosure;
Fig. 17 is a schematic top view of an arrangement of a container number acquisition system according to a ninth exemplary embodiment of the present disclosure;
Figs. 18a and 18b are process schematic diagrams of acquiring images of the container numbers on a plurality of surfaces of a container by using the container number acquisition system shown in Fig. 17;
Fig. 19 is a schematic top view of an arrangement of a container number acquisition system according to a tenth exemplary embodiment of the present disclosure;
Fig. 20 is a process schematic diagram showing capturing statuses of the container number acquisition system shown in Fig. 19, where the upper portion of Fig. 20 illustrates a relative movement between the container and the container number acquisition system and capturing time of the container number acquisition system, and the lower portion of Fig. 20 illustrates a schematic diagram of a capturing time and status transformation relation of the container number acquisition system shown in Fig. 19;
Fig. 21 is another process schematic diagram showing capturing statuses of the container number acquisition system shown in Fig. 19, where the upper portion of Fig. 21 illustrates a relative movement between the container and the container number acquisition system and capturing time of the container number acquisition system, and the lower portion of Fig. 21 illustrates a schematic diagram of a capturing time and status transformation relation of the container number acquisition system shown in Fig. 19;
Fig. 22 is a schematic top view of an arrangement of a container number acquisition system according to an eleventh exemplary embodiment of the present disclosure;
Fig. 23 is a process schematic diagram showing capturing statuses of the container number acquisition system shown in Fig. 22, where the upper portion of Fig. 23 illustrates a relative movement between the container and the container number acquisition system and capturing time of the container number acquisition system, and the lower portion of Fig. 23 illustrates a schematic diagram of a capturing time and status transformation relation of the container number acquisition system shown in Fig. 22; and
Fig. 24 is another process schematic diagram showing capturing statuses of the container number acquisition system shown in Fig. 22, where the upper portion of Fig. 24 illustrates a relative movement between the container and the container number acquisition system and capturing time of the container number acquisition system, and the lower portion of Fig. 24 illustrates a schematic diagram of a capturing time and status transformation relation of the container number acquisition system shown in Fig. 22.

### DETAINED DESCRIPTION OF PREFERRED EMBODIMENTS OF THE INVENTION

Although the present disclosure will be sufficiently described with reference to the attached drawings containing preferred embodiments of the present disclosure, it would be appreciated by those skilled in the art that various changes or modifications may be made in these embodiments without departing from the principle and spirit of the invention, while producing the advantageous effects of the present disclosure. It will be understood that the description of exemplary embodiments of the present disclosure made with reference to the attached drawings is intended to illustrate the general inventive concepts of the present disclosure, and should not be interpreted as being limitative to the present disclosure.

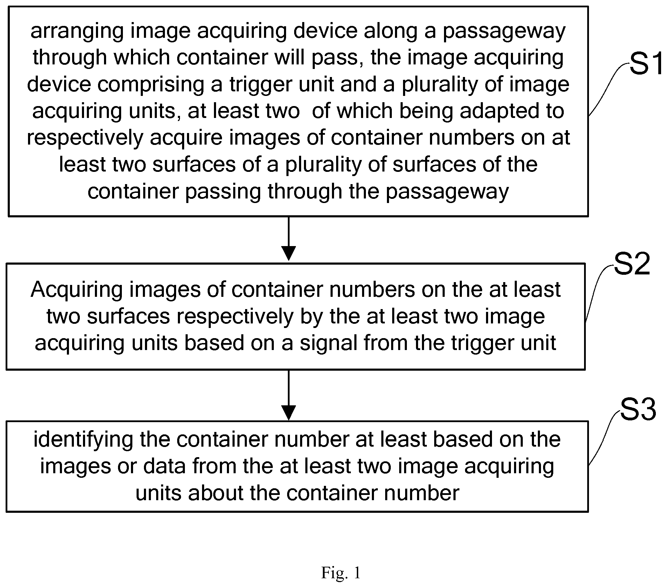

Fig. 1 is a flow chart of a method of acquiring a container number according to an embodiment of the present disclosure. As shown in Fig. 1, the method of acquiring a container number comprising steps of:
S1: arranging an image acquiring device along a passageway through which a container will pass, the image acquiring device comprising a trigger unit and a plurality of image acquiring units, the plurality of image acquiring units being adapted to respectively acquire images of the container numbers on a plurality of surfaces of the container passing through the passageway;
S2: acquiring the images of the container numbers on at least two surfaces respectively by at least two image acquiring units based on a signal from the trigger unit; and
S3: identifying the container number at least based on the images or data from the at least two image acquiring units about the container number.

As such, the images of the container numbers on the at least two surfaces of the container are acquired by the image acquiring units based on the trigger signal from the trigger unit, and container number characters are extracted from one or more of the acquired images through a character recognition algorithm. The images of the container number of the same container captured by the image acquiring device are obtained at different positions at different angles with respect to the container, recognition results are obtained respectively from the image through the character recognition algorithm, and then a vote is taken on the results so as to obtain the result having the greatest correctness. As is known, there is the same container number on all surfaces of the container, that is, even if the container number on one surface cannot be completely identified as it were soiled, broken, blocked or incomplete, identification may also be achieved based on a complete container number on another surface, or by considering and associating container numbers on at least two surfaces (for example, different parts of the numbers on two surfaces are soiled or broken, that is, a part of the number on one surface is soiled or broken, while the same part of the number on the other surface is complete, so a complete number may be obtained by replacing the soiled or broken part of the number on the one surface by the corresponding part of the number on the other surface). Thus, in this way, the container number of the container can be accurately obtained in case that the container passes through the passageway for a single time, that is, accuracy of the recognition result may be improved by obtaining images of numbers at various positions of the same container.

As required by the ISO 6346:1995 "container code, identification and marking standard", a container number is consisted of a case main code, a device identification code, a case number and a check code. The container number mentioned herein includes at least one of the case main code, the device identification code, the case number and the check code.

In the method of the present disclosure, the images of the container numbers on different surfaces of the container may be acquired in sequence, rather than, simultaneously. In an example, the trigger unit is configured to generate the signal based on a relative movement between the container and the passageway, and the images of the container numbers on the at least two surfaces of the plurality of surfaces are respectively acquired by the at least two image acquiring units of the plurality of image acquiring units at different times based on the signal from the trigger unit. At this time, a distance between the at least two image acquiring units in a movement direction of the container relative to the passageway is less than a length of the container. Further, a distance between projections of the at least two image acquiring units in the movement direction of the container relative to the passageway (that is, in a direction of the passageway) is less than the length (20 feet, about 6 meters) of a standard short container, may be set to be less than the length (40 or 45 feet) of a long container. Since the distance between the image acquiring units in the movement direction is less than the length of the container, the length of the passageway may be set to be less than the length of the container, thereby saving an arrangement space.

It will be understood that in the present disclosure, the passageway through which the container passes may be a fixed detection passageway, through which a container transporting apparatus such as a container truck carries the container to travel, and along which the image acquiring device is arranged; alternatively, the passageway through which the container passes may also be a passageway provided or defined by a carrying vehicle, and at least the image acquiring device of the container number identification system is provided on the carrying vehicle along the passageway, wherein the container is kept stationary while the carrying vehicle carries the image acquiring device to move relative to the container such that the container passes through the passageway provided or defined by the carrying vehicle, thereby images of the container numbers on different surfaces of the container may be obtained.

Further in the above method, optionally, the at least two image acquiring units are positioned such that a relative position relationship between each of the at least two image acquiring units and a corresponding one of the surfaces of the container is fixed in two opposite movement directions of the container relative to the passageway when acquiring the image of the container number on the corresponding surface. In other words, no matter in which direction the container passes through the passageway, relative positions between a video camera and the container are fixed when capturing the container number at the same position, such that zooming and adjustment of other parameters of the video camera are not required when the container passes in forward or reverse direction.

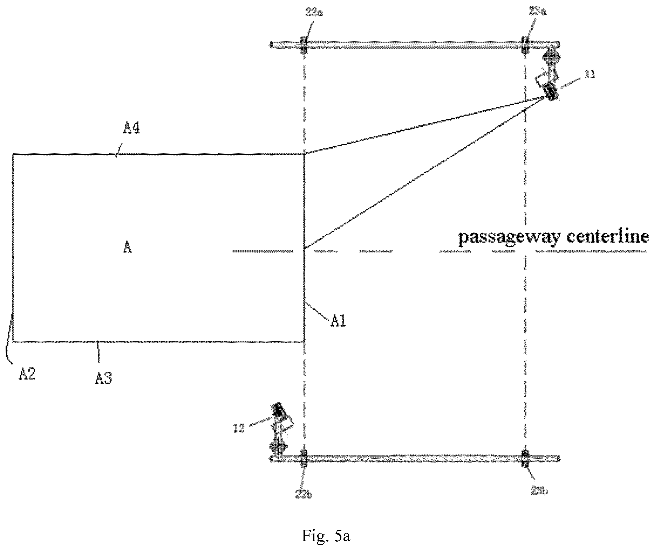

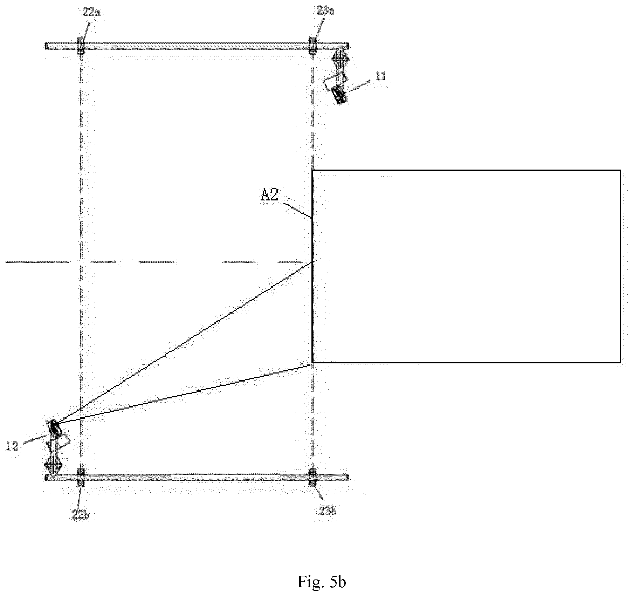

For example, as shown in Fig. 5, when a container A enters the passageway from left to right in Fig. 5a, an image of a portion, on which a container number is provided, of a front surface A1 of the container is captured by a first image acquiring unit 11; when the container A enters the passageway from right to left in Fig. 5b, for example, the image of the portion, on which the container number is provided, of the front surface A1 of the container is still captured by the first image acquiring unit 11. Further, as shown in Fig. 5, when the container A enters the passageway from left to right in Fig. 5a, a signal path of a second group of sensors, which will be described below, is blocked, such that the first image acquiring unit 11 is triggered to perform one capturing operation; when the container A enters the passageway from right to left in Fig. 5b, the signal path of the second group of sensors is restored, such that the first image acquiring unit 11 is triggered to perform one capturing operation. During the two capturing operations, a relative position of the first image acquiring unit 11 is fixed with respect to the front surface A1 of the container when acquiring the image of the container number on the front surface A1 of the container. The above description is also applicable to a rear surface A2 and two side surfaces A3, A4 of the container A.

As such, the present disclosure provide a bidirectional self-adaptive method of acquiring a container number, in which no matter in which direction the container passes through the passageway, in a relative way, a photo of a portion of the container spray coated with number marking can be acquired accurately, thereby enabling acquiring the container number. Based on the container number, the method of the present disclosure can determine types and numbers of the containers passing through the passageway, and obtain dimension codes and container type codes of the containers. With the bidirectional self-adaptive solution of acquiring the container number, the movement direction of the container relative to the passageway is not limited, that is, a travelling direction of the container truck or the carrying vehicle carrying the image acquiring device is not limited.

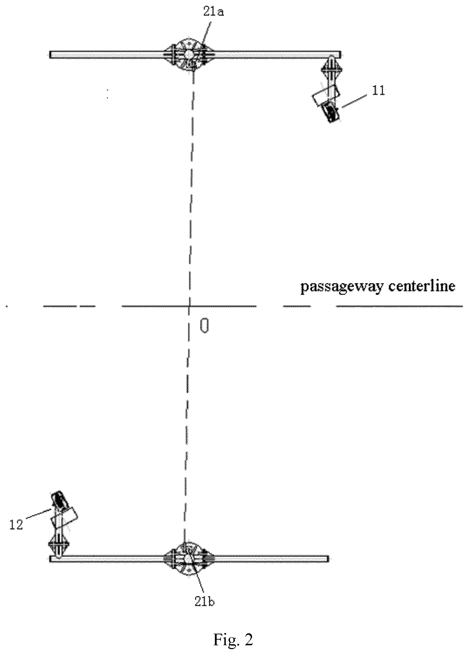

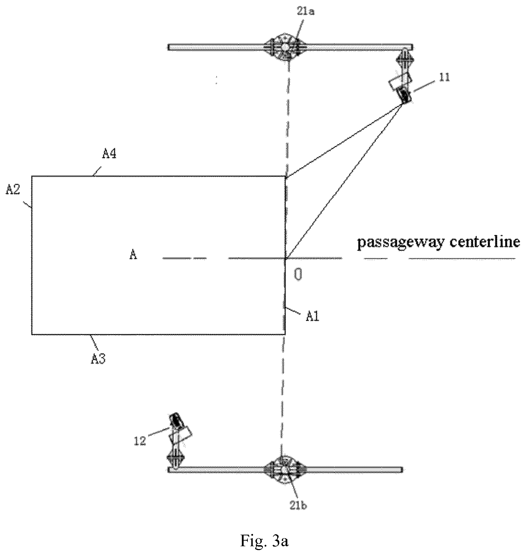

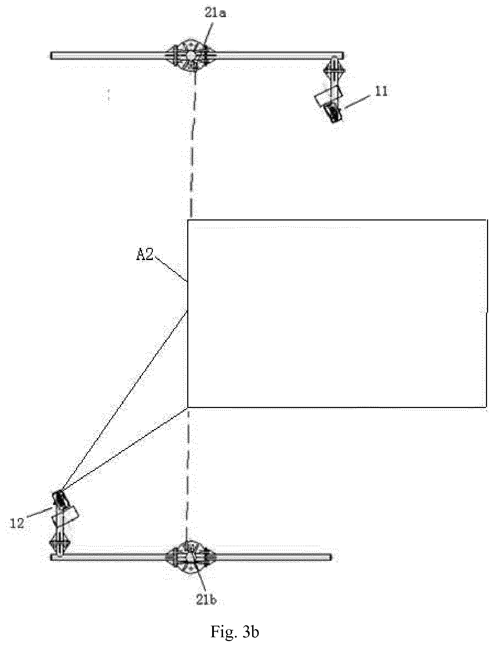

Fig. 2 is a schematic top view of an arrangement and structure of a container number acquisition system according to a first exemplary embodiment of the present disclosure; and Figs. 3a and 3b are process schematic diagrams of acquiring images of the container numbers on a plurality of surfaces of a container by using the container number acquisition system shown in Fig. 2.

In examples shown in Fig. 2 and Figs. 3a and 3b, the trigger unit comprises a first group of sensors including a first signal transmitter portion 21a and a first signal receiving portion 21b located on either side of the container in a direction perpendicular to the movement direction;
the at least two image acquiring units comprise a first image acquiring unit 11 and a second image acquiring unit 12 adapted to respectively acquire images of the container numbers on a front surface and a rear surface of the container;
the step of "acquiring the images of the container numbers on the at least two surfaces of the plurality of surfaces respectively by the at least two image acquiring units at different times based on the signal from the trigger unit" comprises: when a first signal path (indicated by a broken line in Fig. 2 between the first signal transmitter portion 21a and the first signal receiving portion 21b) of the first group of sensors begins to be blocked by one of the front surface A1 and the rear surface A2 (by the front surface A1 in Fig. 3a) of the container A, as shown in Fig. 3a, acquiring the image of the container number on the one of the front surface and the rear surface by a corresponding one of the first image acquiring unit 11 and second image acquiring unit 11 (by the first image acquiring unit 11 in Fig. 3a); and when the other of the front surface A1 and the rear surface A2 of the container A (the rear surface A2 in Fig. 3b) departs away from the first signal path of the first group of sensors so that the first signal path is restored, as shown in Fig. 3b, acquiring the image of the container number on the other of the front surface and the rear surface by the other corresponding one of the first image acquiring unit 11 and second image acquiring unit 12 (by the second image acquiring unit 12 in Fig. 3).

Optionally, in embodiments shown in Fig. 2 and Figs. 3a and 3b, a midpoint of a connection line between the first image acquiring unit 11 and the second image acquiring unit 12 is a midpoint of the first signal path. As such, the first and second image acquiring units are arranged to be symmetrical about the midpoint. This symmetrical arrangement enables capturing time to be the same or symmetrical, such that image acquiring units arranged to be symmetrical with respect to each other may use the same set of correction parameters, thereby reducing workload in correcting the image by the character recognition algorithm. In an example, the first image acquiring unit 11 and the second image acquiring unit 12 capture images at the same capturing distance and with the same viewing angle. As such, the position of the captured character in the image and a distortion of the character due to use of lens are identical for the two image acquiring units. For each distorted character, the image algorithm needs a set of correction parameters to correct the image of the character and then recognize the character. The correction parameters need to be applied to image acquiring units at different positions one by one. It is found that if a symmetrical arrangement is used, correction parameters calibrated and generated through one camera may be used for the first image acquiring unit 11 and the second image acquiring unit 12, thereby reducing workload of calibration. Otherwise, if asymmetrical arrangement is used, correction needs to be made for all image acquiring unit because the capturing angles and distances of respective image acquiring units are not consistent with each other. In addition, if the capturing times are not the same or not symmetrical with respect to each other when the container passes through the passageway in forward and reverse directions, focusing operations during forward directional and reverse directional pass are not identical to each other and thus it is required to add an automatic focusing operation for the image acquiring unit. However, there may be not enough time to finish the automatic focusing operation when the container passes at a high speed, thereby resulting in out of focus of the image.

In the present disclosure, the type of the sensor is not particularly limited, as long as the sensor can accurately sense the position of the container in the passageway. Generally, a photoelectric switch may be used as the sensor, that is, the signal transmitter portion and the signal receiving portion are respectively a light transmission portion and a light receiving portion, and accordingly the signal path is a light beam path. The sensor may also include an ultrasonic sensor, a light curtain, a ground induction coil or the like. In the present disclosure, although it is described that each group of sensors is provided with or includes a signal transmitter portion and a signal receiving portion, the sensor may also be a scattering sensor, that is, no signal transmitter portion is needed, and only a signal receiving portion is provided to sense whether or not a container truck arrives. Accordingly, each group of sensors may comprise a signal receiving portion located on an inner side of the passageway. In the present disclosure, in an embodiment where both the signal transmitter portion and the signal receiving portion are provided, blocking or departing from the signal path means blocking or restoring the signal path between the signal transmitter portion and the signal receiving portion; in an embodiment where only the signal receiving portion is provided, blocking or departing from the signal path means that the signal receiving portion cannot receive any signal due to travelling of the container or the signal receiving portion restores to receive a signal. The above description may also be applied to all exemplary embodiments of the present disclosure.

The photoelectric switch will be described as an example in exemplary embodiments of the present disclosure.

In the present disclosure, the image acquiring unit may include any image acquiring unit which may capture an image of a container number on a surface of a container and generate a digital signal. In an example, the image acquiring unit is a digital camera, such that the image of the container number may be obtained through one capturing operation. The image acquiring unit may also be a digital video camera, such that the image of the container number may be obtained by extracting one frame of data from a video stream from the video camera and saving it as an image.

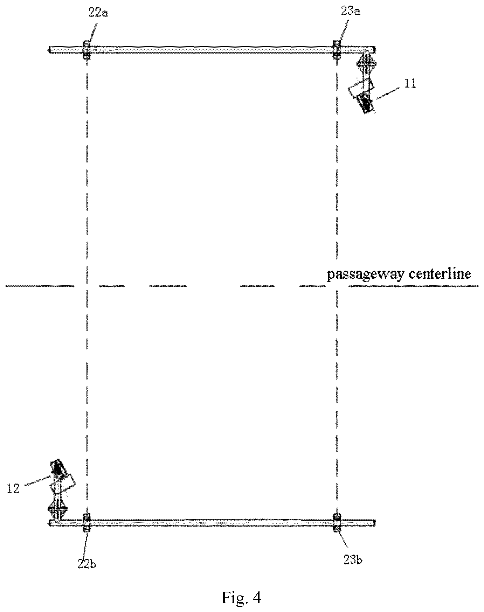

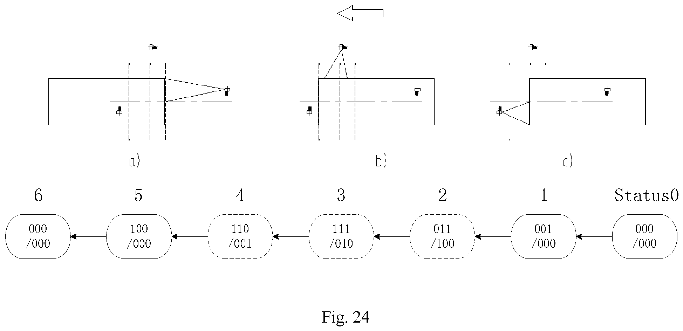

Fig. 4 is a schematic top view of an arrangement and structure of a container number acquisition system according to a second exemplary embodiment of the present disclosure; and Figs. 5a and 5b are process schematic diagrams of acquiring images of the container numbers on a plurality of surfaces of a container by using the container number acquisition system shown in Fig. 4.

As shown in Fig. 4, the trigger unit comprises a second group of sensors and a third group of sensors arranged to space apart from each other in the movement direction of the container relative to the passageway, the second group of sensors including a second signal transmitter portion 22a and a second signal receiving portion 22b located on either side of the container in the direction perpendicular to the movement direction, the third group of sensors including a third signal transmitter portion 23a and a second signal receiving portion 23b located on either side of the container in the direction perpendicular to the movement direction. The at least two image acquiring units comprise the first image acquiring unit 11 and the second image acquiring unit 12 adapted to respectively acquire images of the container numbers on the front surface A1 and the rear surface A2 of the container A. As shown in Fig. 5, the step of "acquiring the images of the container numbers on the at least two surfaces of the plurality of surfaces respectively by the at least two image acquiring units at different times based on the signal from the trigger unit at different times" comprises: when a second signal path of the second group of sensors begins to be blocked by one of the front surface A1 and the rear surface A2 (by the front surface A1 in Fig. 5a) of the container A, as shown in Fig. 5a, acquiring the image of the container number on the one of the front surface and the rear surface by a corresponding one of the first image acquiring unit 11 and second image acquiring unit 11 (by the first image acquiring unit 11 in Fig. 5a); and when the other of the front surface A1 and the rear surface A2 of the container A (the rear surface A2 in Fig. 3b) departs away from the second signal path of the second group of sensors so that the second signal path is restored, as shown in Fig. 5b, acquiring the image of the container number on the other of the front surface and the rear surface by the other corresponding one of the first image acquiring unit 11 and second image acquiring unit 12 (by the second image acquiring unit 12 in Fig. 5b).

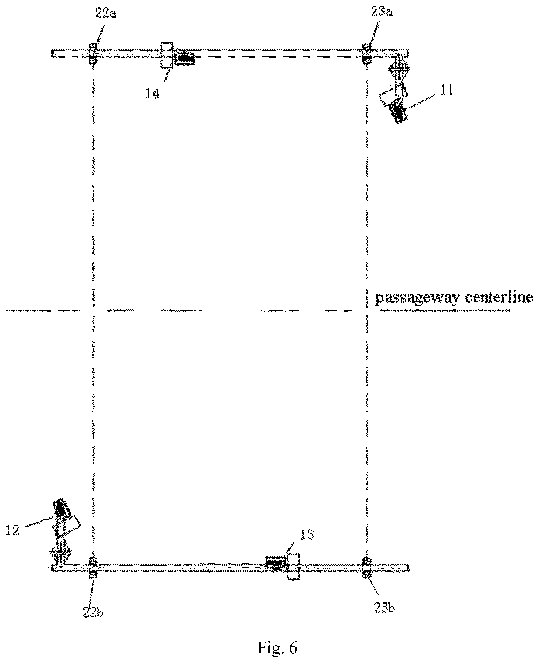

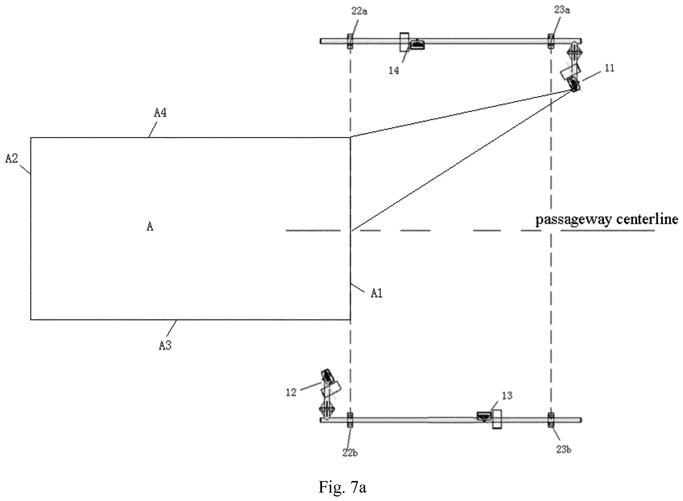

Fig. 6 is a schematic top view of an arrangement and structure of a container number acquisition system according to a third exemplary embodiment of the present disclosure; and Figs. 7a-d are process schematic diagrams of acquiring images of the container numbers on a plurality of surfaces of a container by using the container number acquisition system shown in Fig. 6.

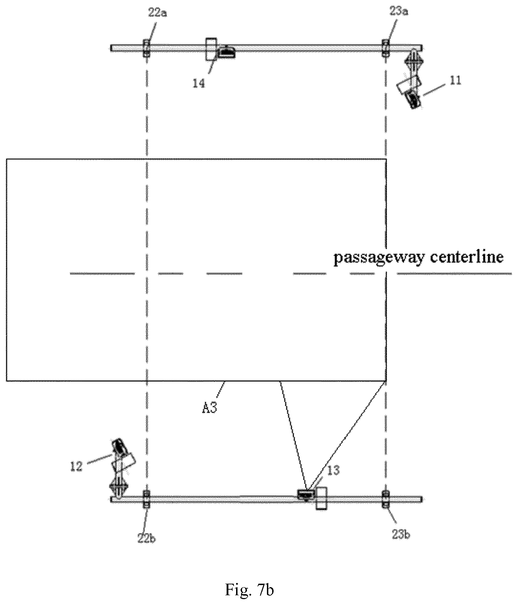

As shown in Fig. 6 and Figs. 7a-d, compared to examples shown in Figs. 4-5, the at least two image acquiring units further comprises a third image acquiring unit 13 adapted to acquire an image of a container number on one side surface of the container (the right side surface A3 in Figs. 7a and 7b).

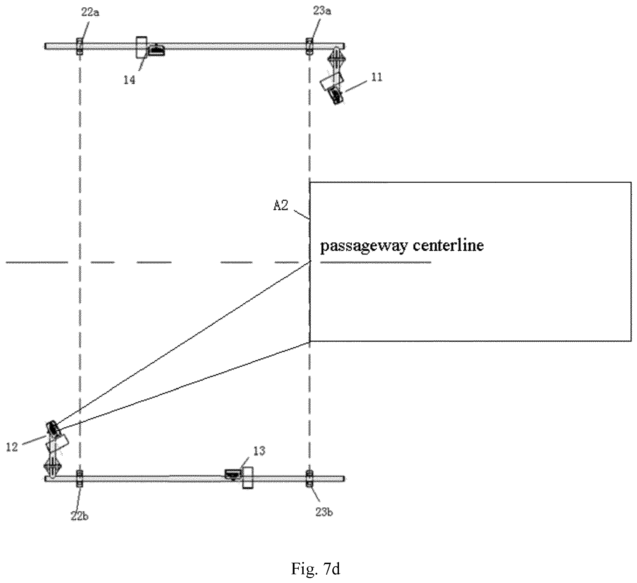

In examples shown in Fig. 6 and Figs. 7a-d, the step of "acquiring the images of the container numbers on the at least two surfaces of the plurality of surfaces respectively by the at least two image acquiring units at different times based on the signal from the trigger unit" further comprises steps of:
when the second signal path of the second group of sensors begins to be blocked by one of the front surface A1 and the rear surface A2 (by the front surface A1 in Fig. 7a) of the container A, as shown in Fig. 7a, acquiring the image of the container number on the one of the front surface and the rear surface by a corresponding one of the first image acquiring unit 11 and second image acquiring unit 11 (by the first image acquiring unit 11 in Fig. 7a);
acquiring the image of the container number on the one side surface by the third image acquiring unit 13 when a third signal path of the third group of sensors begins to be blocked by one of the front surface A1 and the rear surface A2 of the container A (by the front surface A1 in Fig. 7b); and
when the other of the front surface A1 and the rear surface A2 of the container A (the rear surface A2 in Fig. 7d) departs away from the third signal path of the third group of sensors so that the third signal path is restored, as shown in Fig. 7d, acquiring the image of the container number on the other of the front surface and the rear surface by the other corresponding one of the first image acquiring unit 11 and second image acquiring unit 12 (by the second image acquiring unit 12 in Fig. 7d).

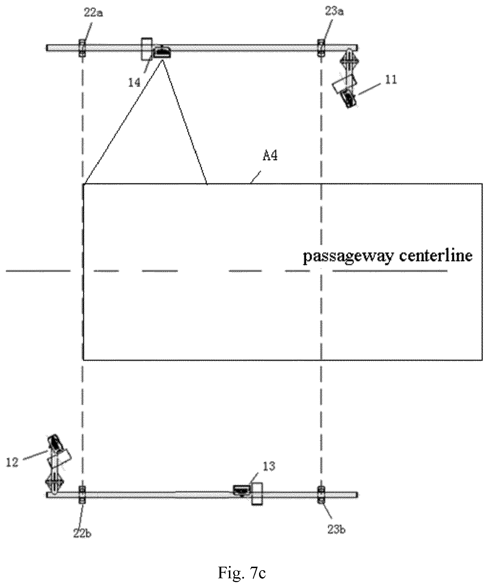

Further, as shown in Fig. 6 and Figs. 7a-d, the at least two image acquiring units further comprises a fourth image acquiring unit 14 adapted to acquire an image of a container number on another side surface (correspondingly, the left side surface A4 in Figs. 7a-c) of the container. The step of "acquiring the images of the container numbers on the at least two surfaces of the plurality of surfaces respectively by the at least two image acquiring units at different times based on the signal from the trigger unit" further comprises, between the step as shown in Fig. 7b and the step as shown in Fig. 7d, acquiring the image of the container number on the another side surface by the fourth image acquiring unit 14 when the one of the front surface A1 and the rear surface A2 of the container A (the rear surface A2 in Fig. 7) departs away from the second signal path of the second group of sensors so that the second signal path is restored, as shown in Fig. 7c.

In a further optional embodiment, as shown in Fig. 6, a midpoint of a connection line between the first image acquiring unit 11 and the second image acquiring unit 12 is also a midpoint of a connection line between the third image acquiring unit 13 and the fourth image acquiring unit 14. This symmetrical arrangement enables capturing times to be symmetrical, such that image acquiring units arranged to be symmetrical with respect to each other may use the same set of correction parameters, thereby reducing workload in correcting the image by the character recognition algorithm. In an example, as shown in Figs. 7a-c, the first image acquiring unit 11, the second image acquiring unit 12, the third image acquiring unit 13 and the fourth image acquiring unit 14 capture/shoot images at the same capturing distance and angle. As such, the position of the captured character in the image and a distortion of the character due to use of lens are identical for the image acquiring units. For each distorted character, the image algorithm needs a set of correction parameters to correct the image of the character and then recognize the character. The correction parameters need to be applied to image acquiring units at different positions one by one. It is found that if a symmetrical arrangement is used, correction parameters calibrated and generated through one camera of the first and second image acquiring units may be used for the first image acquiring unit 11 and the second image acquiring unit 12, and correction parameters calibrated and generated through one camera of the third and fourth image acquiring units may be also used for the third image acquiring unit 13 and the fourth image acquiring unit 14, thereby reducing workload of calibration. Otherwise, if asymmetrical arrangement is used, correction needs to be made for all image acquiring unit because the capturing angles and distances of respective image acquiring units are not consistent with one another. In addition, if the capturing times are not the same or symmetrical with respect to each other when the container passes through the passageway in forward and reverse directions, it is required to add an automatic focusing operation for the image acquiring unit, and there may be not enough time to finish the automatic focusing operation when the container passes at a high speed, thereby resulting in out of focus of the image.

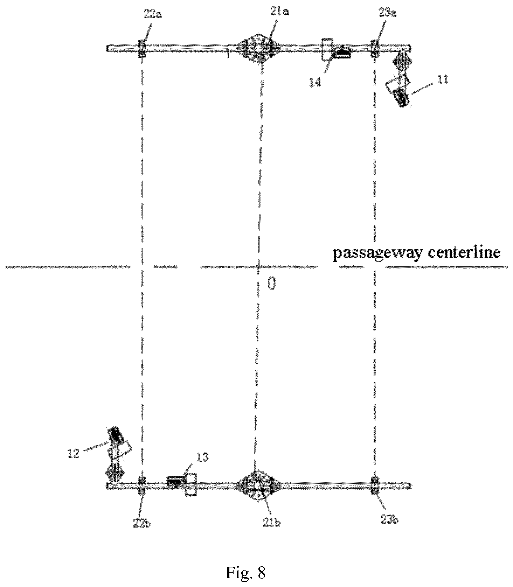

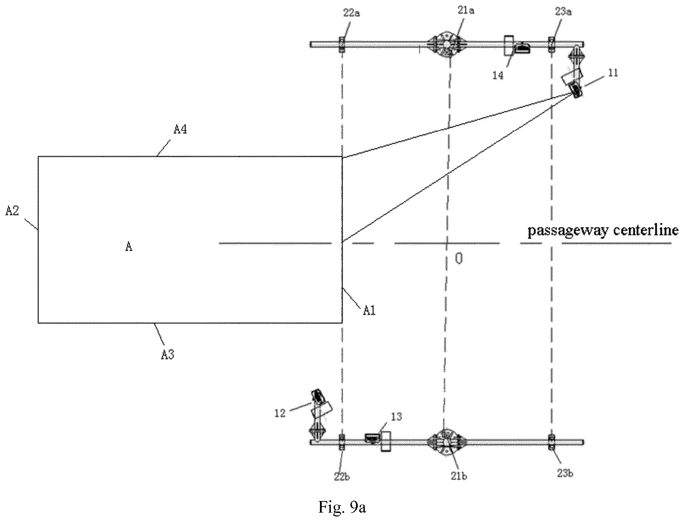

Fig. 8 is a schematic top view of an arrangement and structure of a container number acquisition system according to a fourth exemplary embodiment of the present disclosure; and Figs. 9a-d are process schematic diagrams of acquiring images of the container numbers on a plurality of surfaces of a container by using the container number acquisition system shown in Fig. 8.

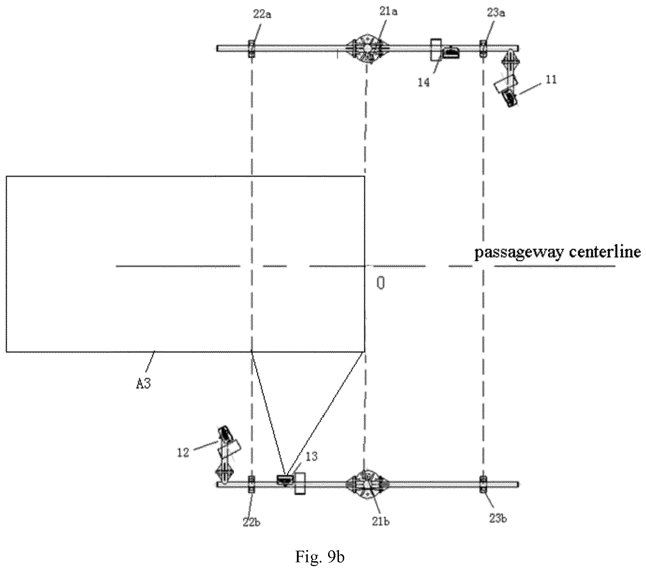

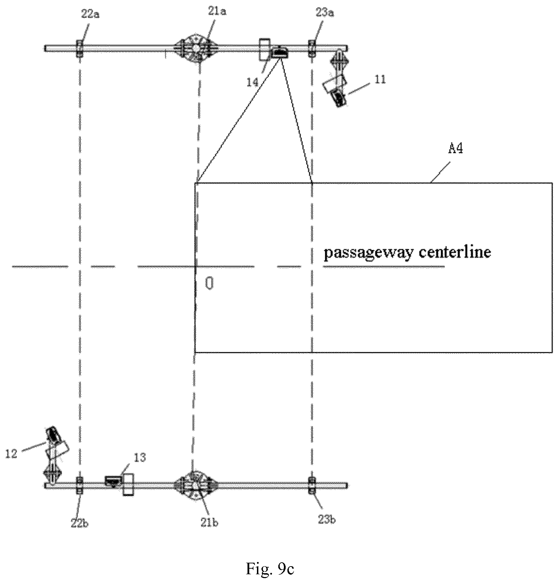

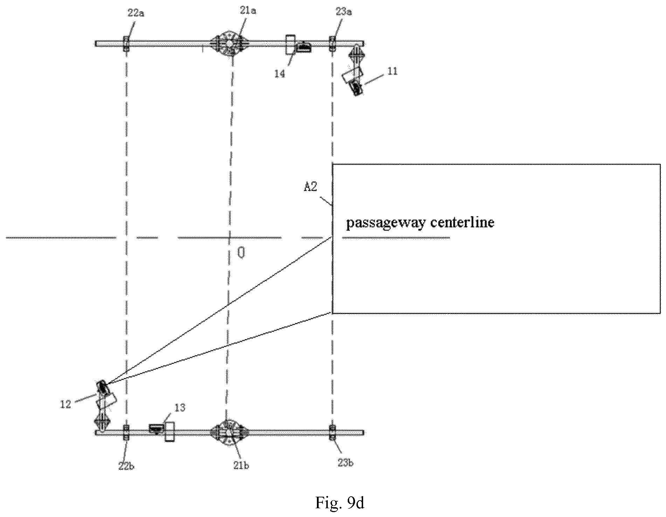

In the example shown in Fig. 8:
the trigger unit comprises a first group of sensors, a second group of sensors and a third group of sensors arranged to space apart from one another in the movement direction of the container relative to the passageway, the first group of sensors is located between the second group of sensors and the third group of sensors in the movement direction, the first group of sensors includes a first signal transmitter portion 21a and a first signal receiving portion 21b located on either side of the container in a direction perpendicular to the movement direction, the second group of sensors includes a second signal transmitter portion 22a and a second signal receiving portion 22b located on either side of the container in the direction perpendicular to the movement direction, and the third group of sensors includes a third signal transmitter portion 23a and a second signal receiving portion 23b located on either side of the container in the direction perpendicular to the movement direction;
the at least two image acquiring units comprises: a first image acquiring unit 11 and a second image acquiring unit 12 adapted to respectively acquire images of the container numbers on the front surface A1 and the rear surface A2 of the container A; and a third image acquiring unit 13 adapted to acquire an image of a container number on one side surface (the right side surface A3 in Fig. 9) of the container and a fourth image acquiring unit 14 adapted to acquire an image of a container number on another side surface (the left side surface A4 in Fig. 9) of the container;
the step of "acquiring the images of the container numbers on the at least two surfaces of the plurality of surfaces respectively by the at least two image acquiring units at different times based on the signal from the trigger unit" comprises: when a second signal path of the second group of sensors begins to be blocked by one of the front surface A1 and the rear surface A2 (by the front surface A1 in Fig. 9) of the container A, as shown in Fig. 9a, acquiring the image of the container number on the one of the front surface and the rear surface by a corresponding one of the first image acquiring unit 11 and second image acquiring unit 11 (by the first image acquiring unit 11 in Fig. 9); acquiring the image of the container number on the one side surface by the third image acquiring unit 13 when a first signal path of the first group of sensors begins to be blocked by one of the front surface A1 and the rear surface A2 of the container A (the front surface A1 in Fig. 9), as shown in Fig. 9b; when the other of the front surface A1 and the rear surface A2 of the container A (the rear surface A2 in Fig. 9) departs away from the first signal path of the first group of sensors so that the first signal path is restored, as shown in Fig. 9c, acquiring the image of the container number on the another side surface by the fourth image acquiring unit 14; and when the other of the front surface A1 and the rear surface A2 of the container A (the rear surface A2 in Fig. 9) departs away from the third signal path of the third group of sensors so that the third signal path is restored, as shown in Fig. 9d, acquiring the image of the container number on the other of the front surface and the rear surface by the other corresponding one of the first image acquiring unit 11 and second image acquiring unit 12 (by the second image acquiring unit 12 in Fig. 9).

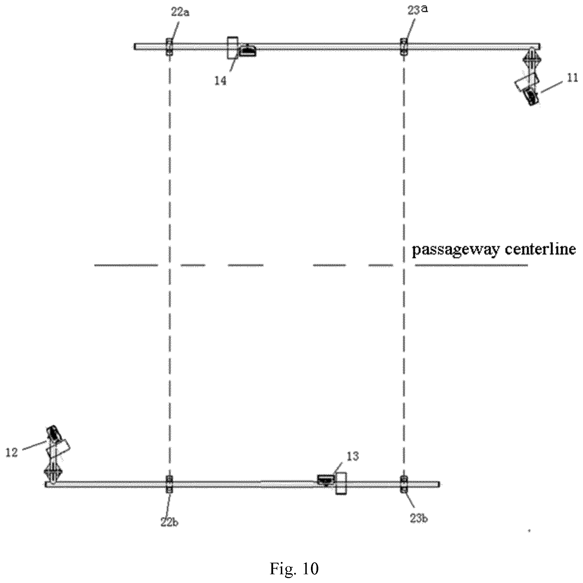

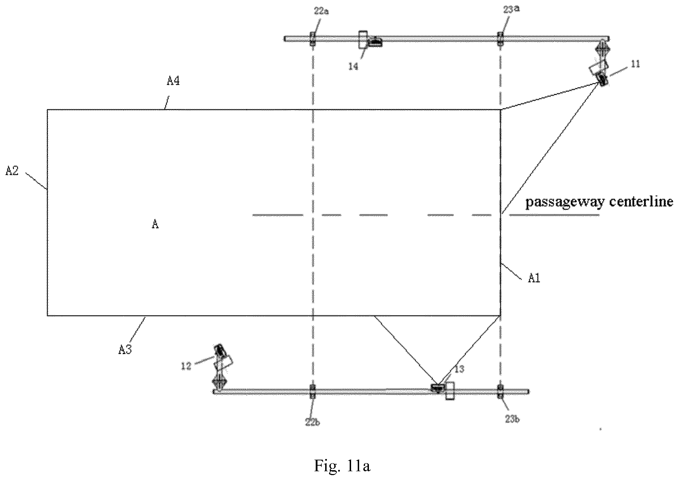

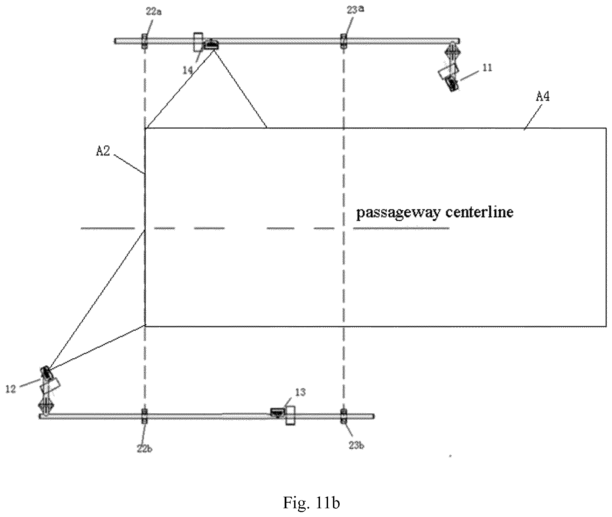

Fig. 10 is a schematic top view of an arrangement and structure of a container number acquisition system according to a fifth exemplary embodiment of the present disclosure; and Figs. 11a and 11b are process schematic diagrams of acquiring images of the container numbers on a plurality of surfaces of a container by using the container number acquisition system shown in Fig. 10.

The trigger unit comprises a second group of sensors and a third group of sensors arranged to space apart from each other in the movement direction of the container relative to the passageway, the second group of sensors includes a second signal transmitter portion 22a and a second signal receiving portion 22b located on either side of the container in the direction perpendicular to the movement direction, and the third group of sensors includes a third signal transmitter portion 23a and a second signal receiving portion 23b located on either side of the container in the direction perpendicular to the movement direction;
the at least two image acquiring units comprises the first image acquiring unit 11 and the second image acquiring unit 12 adapted to respectively acquire images of the container numbers on the front surface A1 and the rear surface A2 of the container A, and the at least two image acquiring units further comprises the third image acquiring unit 13 adapted to acquire an image of a container number on one side surface of the container and the fourth image acquiring unit 14 adapted to acquire an image of a container number on another side surface of the container;
the step of "acquiring the images of the container numbers on the at least two surfaces of the plurality of surfaces respectively by the at least two image acquiring units at different times based on the signal from the trigger unit" comprises:
as shown in Fig. 11, when a third signal path of the third group of sensors begins to be blocked by one of the front surface A1 and the rear surface A2 of the container A (by the front surface A1 in Fig. 11), as shown in Fig. 11a, acquiring the image of the container number on the one side surface (the right side surface A3 in Fig. 11) by the third image acquiring unit 13 and acquiring the image of the container number on the one of the front surface and the rear surface by a corresponding one of the first image acquiring unit and second image acquiring unit; and
when the other of the front surface and the rear surface (the rear surface A2 in Fig. 11) departs away from a second signal path of the second group of sensors so that the second signal path is restored, as shown in Fig. 11b, acquiring the image of the container number on the another side surface (the left side surface A4 in Fig. 10) by the fourth image acquiring unit 14 and acquiring the image of the container number on the other of the front surface and the rear surface of the container by the other corresponding one of the first image acquiring unit and second image acquiring unit.

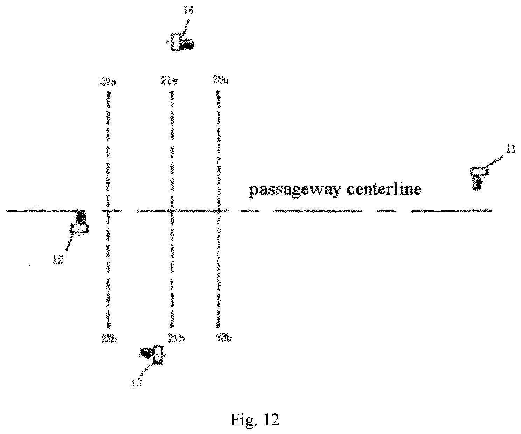

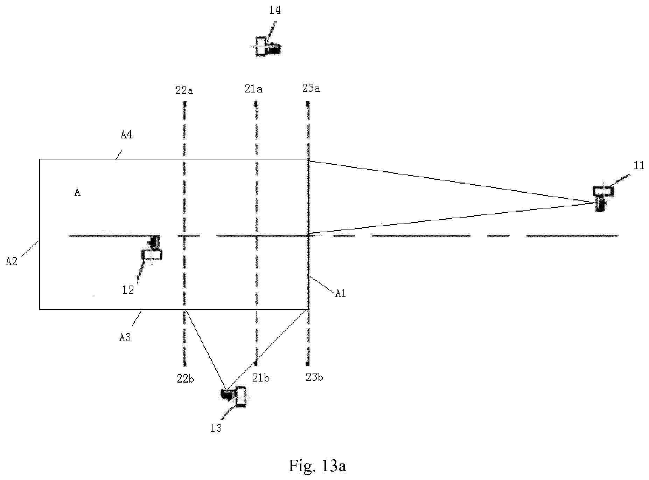

Fig. 12 is a schematic top view of an arrangement and structure of a container number acquisition system according to a sixth exemplary embodiment of the present disclosure; and Figs. 13a-c are process schematic diagrams of acquiring images of the container numbers on a plurality of surfaces of a container by using the container number acquisition system shown in Fig. 12.

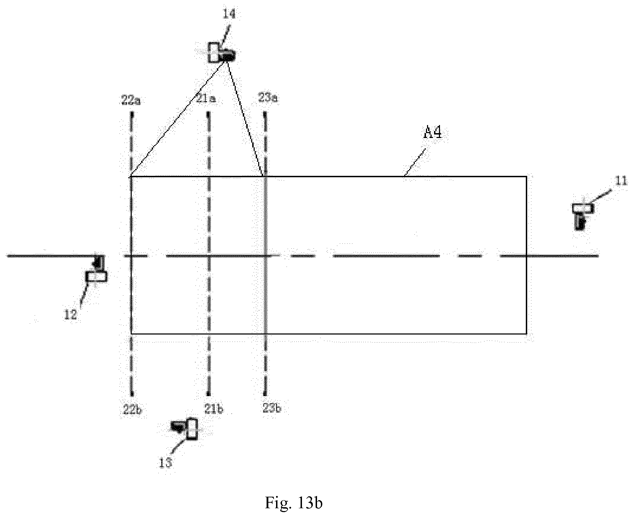

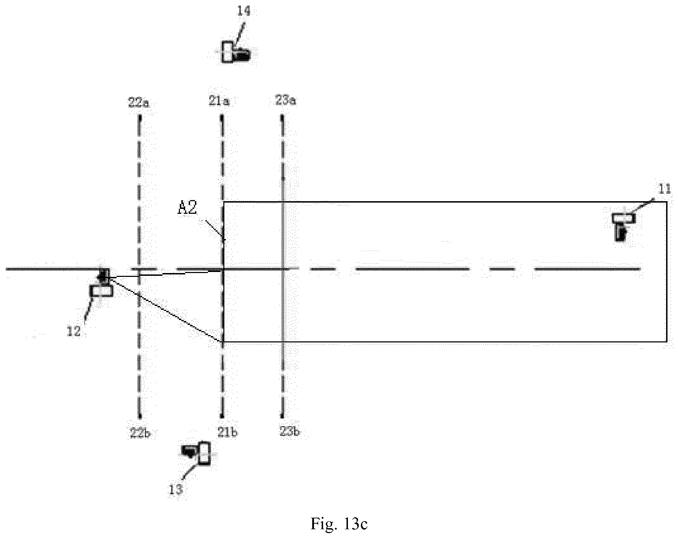

The trigger unit comprises a second group of sensors and a third group of sensors arranged to space apart from each other in the movement direction of the container relative to the passageway, the second group of sensors includes a second signal transmitter portion 22a and a second signal receiving portion 22b located on either side of the container in the direction perpendicular to the movement direction, and the third group of sensors includes a third signal transmitter portion 23a and a third signal receiving portion 23b located on either side of the container in the direction perpendicular to the movement direction; the trigger unit further comprises a first group of sensors, and the first group of sensors includes a first signal transmitter portion 21a and a first signal receiving portion 21b located on either side of the container in the direction perpendicular to the movement direction, and is located between the second group of sensors and the third group of sensors in the movement direction;
the at least two image acquiring units comprises the first image acquiring unit 11 and the second image acquiring unit 12 adapted to respectively acquire images of the container numbers on the front surface A1 and the rear surface A2 of the container A, and the at least two image acquiring units further comprises the third image acquiring unit 13 adapted to acquire an image of a container number on one side surface of the container and the fourth image acquiring unit 14 adapted to acquire an image of a container number on another side surface of the container;
the step of "acquiring the images of the container numbers on the at least two surfaces of the plurality of surfaces respectively by the at least two image acquiring units at different times based on the signal from the trigger unit" comprises:
when a third signal path of the third group of sensors begins to be blocked by one of the front surface A1 and the rear surface A2 of the container A (by the front surface A1 in Fig. 13), as shown in Fig. 13a, acquiring the image of the container number on the one side surface (the right side surface A3 in Fig. 13) by the third image acquiring unit 13 and acquiring the image of the container number on the one of the front surface and the rear surface by a corresponding one of the first image acquiring unit and second image acquiring unit (by the first image acquiring unit 11 in Fig. 13);
acquiring the image of the container number on the another side surface (the left side surface A4 in Fig. 13) by the fourth image acquiring unit 14 when the other of the front surface and the rear surface of the container (the rear surface A2 in Fig. 13) begins to depart away from the second signal path of the second group of sensors so that the second signal path is restored, as shown in Fig. 13b; and
acquiring the image of the container number on the other of the front surface and the rear surface of the container by the other corresponding one of the first image acquiring unit and second image acquiring unit (by the second image acquiring unit 12 in Fig. 13), when the other of the front surface and the rear surface departs away from a first signal path of the first group of sensors 11 so that the first signal path is restored, as shown in Fig. 13c.

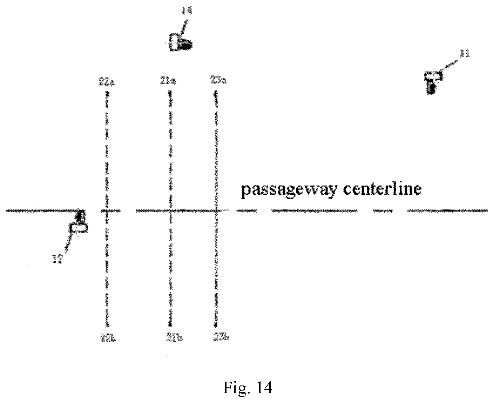

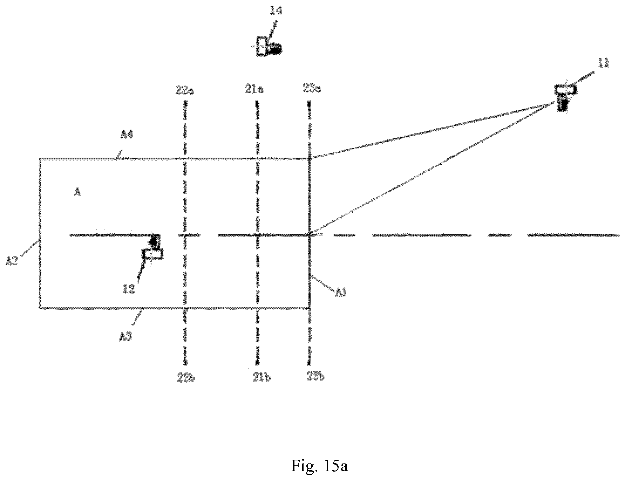

Fig. 14 is a schematic top view of an arrangement of a container number acquisition system according to a seventh exemplary embodiment of the present disclosure; and Figs. 15a-c are process schematic diagrams of acquiring images of the container numbers on a plurality of surfaces of a container by using the container number acquisition system shown in Fig. 14.

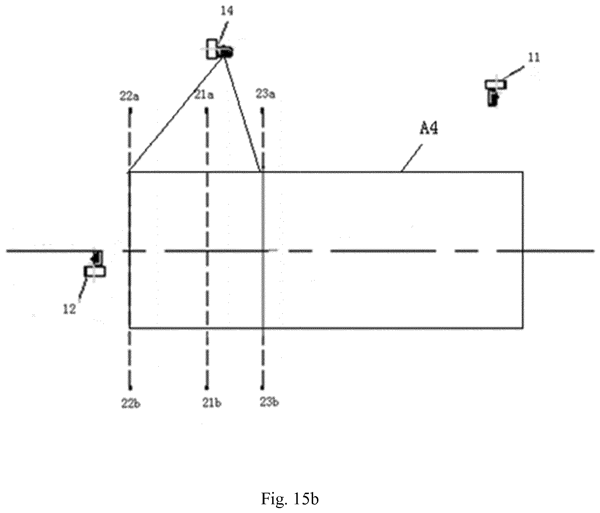

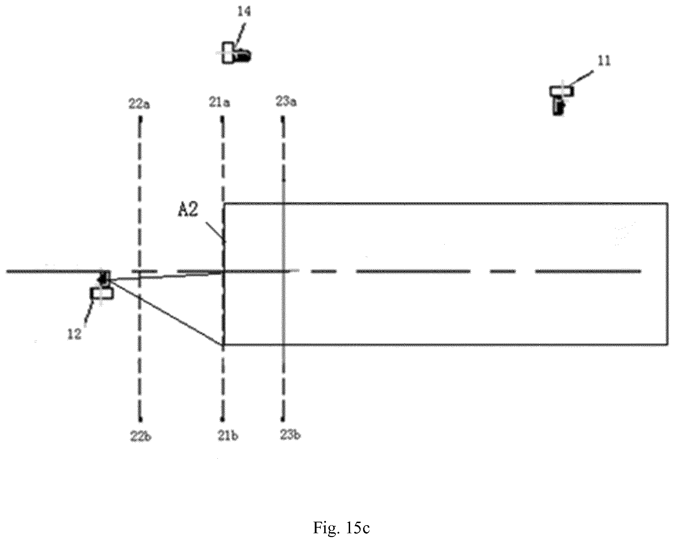

In this embodiment, the trigger unit comprises a second group of sensors and a third group of sensors arranged to space apart from each other in the movement direction of the container relative to the passageway, the second group of sensors includes a second signal transmitter portion 22a and a second signal receiving portion 22b located on either side of the container in the direction perpendicular to the movement direction, and the third group of sensors includes a third signal transmitter portion 23a and a third signal receiving portion 23b located on either side of the container in the direction perpendicular to the movement direction; the trigger unit further comprises a first group of sensors, and the first group of sensors includes a first signal transmitter portion 21a and a first signal receiving portion 21b located on either side of the container in the direction perpendicular to the movement direction, and is located between the second group of sensors and the third group of sensors in the movement direction;
the at least two image acquiring units comprises the first image acquiring unit 11 and the second image acquiring unit 12 adapted to respectively acquire images of the container numbers on the front surface A1 and the rear surface A2 of the container A, and the at least two image acquiring units further comprises a fourth image acquiring unit 14 adapted to acquire an image of a container number on one side surface of the container;
the step of "acquiring the images of the container numbers on the at least two surfaces of the plurality of surfaces respectively by the at least two image acquiring units at different times based on the signal from the trigger unit" comprises:
when a third signal path of the third group of sensors begins to be blocked by one of the front surface A1 and the rear surface A2 of the container A (by the front surface A1 in Fig. 15), as shown in Fig. 15a, acquiring the image of the container number on the one of the front surface and the rear surface by a corresponding one of the first image acquiring unit and second image acquiring unit (by the first image acquiring unit 11 in Fig. 13);
acquiring the image of the container number on the one side surface (the left side surface A4 in Fig. 13) by the fourth image acquiring unit 14 when the other (the rear surface A2 in Fig. 13) of the front surface and the rear surface of the container begins to depart away from the second signal path of the second group of sensors so that the second signal path is restored, as shown in Fig. 15b; and
acquiring the image of the container number on the other of the front surface and the rear surface of the container by the other corresponding one of the first image acquiring unit and second image acquiring unit (by the second image acquiring unit 12 in Fig. 13), when the other of the front surface and the rear surface departs away from a first signal path of the first group of sensors so that the first signal path is restored, as shown in Fig. 15c.

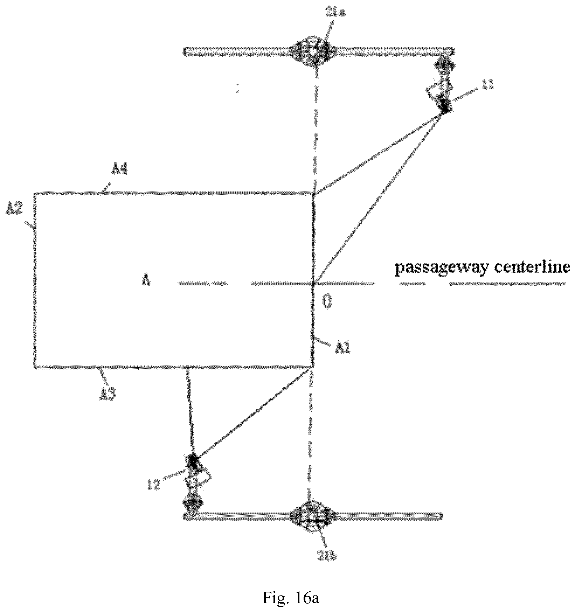

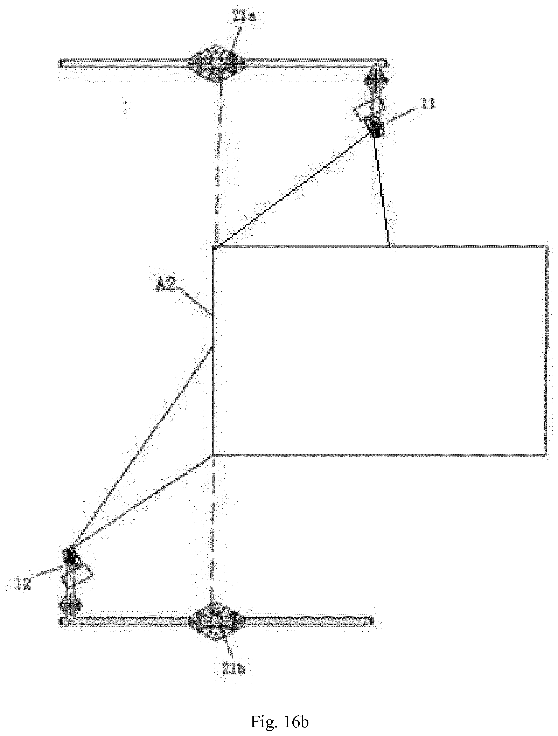

Fig. 16a is process schematic diagram of acquiring images of the container numbers on a plurality of surfaces of a container according to an eighth exemplary embodiment of the present disclosure; and Fig. 16b is process schematic diagram of acquiring images of the container numbers on a plurality of surfaces of a container according to a variation of the eighth exemplary embodiment of the present disclosure.

As shown in Figs. 16a and 16b, the at least two image acquiring units comprise one image acquiring unit adapted to acquire an image of a container number on one of a front surface, a rear surface, side surfaces, and a top surface of a container (in Fig. 16a, for example, an image acquiring unit 11 which acquires an image of a container number on the front surface A1; in Fig. 16b, for example, an image acquiring unit 12 which acquires an image of a container number on the rear surface A2), and another image acquiring unit adapted to acquire an image of a container number on another one of the front surface, the rear surface, the side surfaces, and the top surface of the container (in Fig. 16a, for example, an image acquiring unit 13 which acquires an image of a container number on the right side surface A3; in Fig. 16b, for example, an image acquiring unit 14 which acquires an image of a container number on the left side surface A4);
the trigger unit comprises a group of sensors, for example, as indicated by reference numerals 21a, 21b in Fig. 16a, 16b, and the one image acquiring unit and the another image acquiring unit are triggered at the same time based on signals from the group of sensors. For example, in Fig. 16a, the image acquiring units 11 and 13 are triggered at the same time based on a signal path of the group of sensors being blocked by the front surface A1 of the container, and in Fig. 16b, the image acquiring units 12 and 14 are triggered at the same time based on restoration of the signal path of the group of sensors after the rear surface A2 of the container departs away.

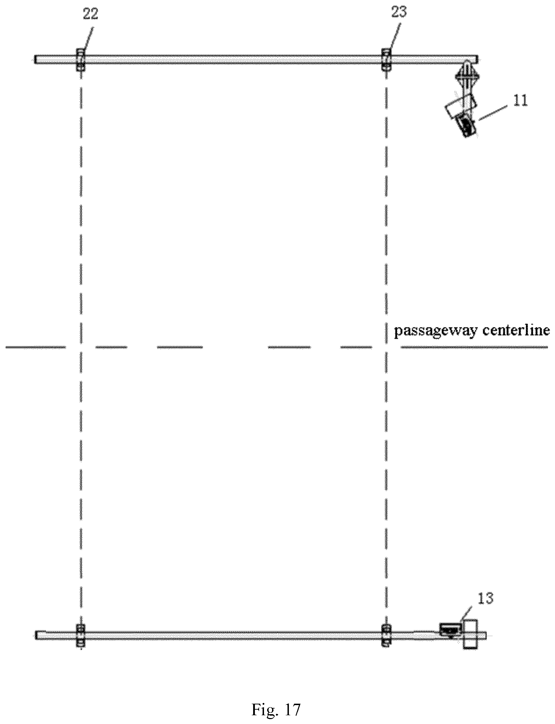

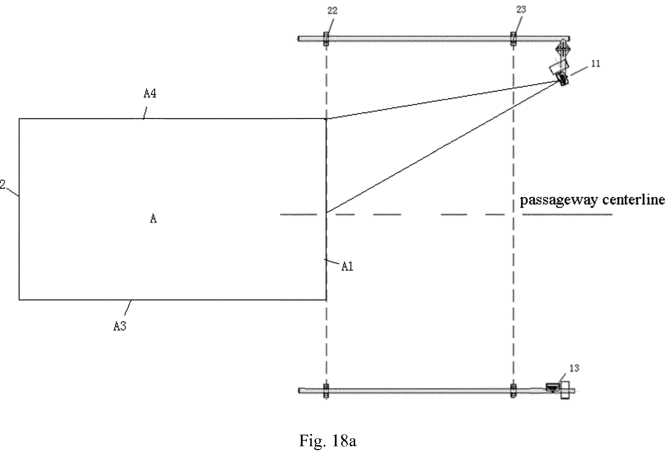

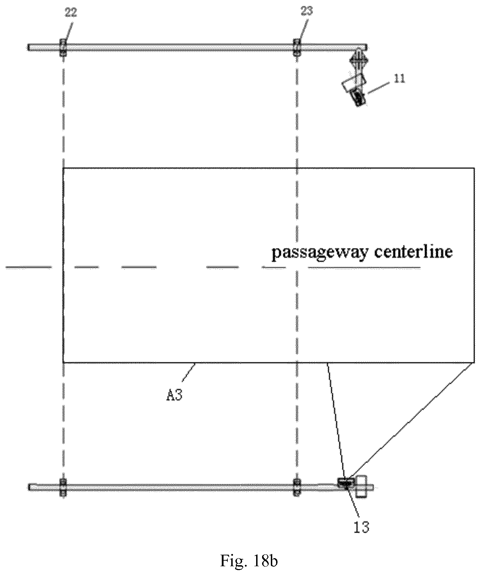

Fig. 17 is a schematic top view of an arrangement and structure of a container number acquisition system according to a ninth exemplary embodiment of the present disclosure; and Figs. 18a and 18b are process schematic diagrams of acquiring images of the container numbers on a plurality of surfaces of a container by using the container number acquisition system shown in Fig. 16.

As shown in Fig. 17 and Fig. 18a and 18b, the at least two image acquiring units comprise one image acquiring unit adapted to acquire an image of a container number on one of a front surface, a rear surface, side surfaces, and a top surface of a container (in Fig. 18a, for example, an image acquiring unit 11 which acquires an image of a container number on the front surface A1), and another image acquiring unit adapted to acquire an image of a container number on another one of the front surface, the rear surface, the side surfaces, and the top surface of the container (in Fig. 18b, for example, an image acquiring unit 13 which acquires an image of a container number on the left side surface A3); the trigger unit comprises two groups of sensors 22, 23, and the one image acquiring unit 11 and the another image acquiring unit 13 are triggered at the same time based on signals from the two groups of sensors; each group of sensors includes a signal transmitter portion and a signal receiving portion located on either side of the container in a direction perpendicular to the movement direction of the container relative to the passageway.

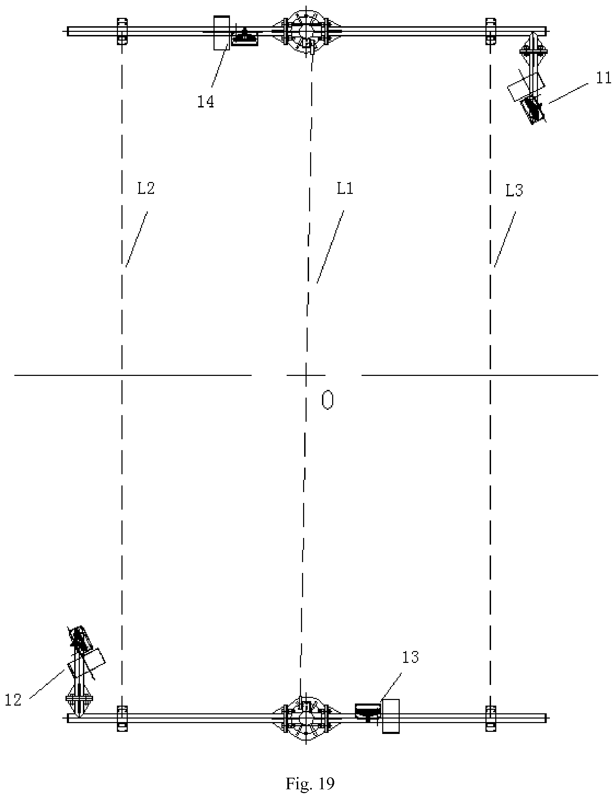

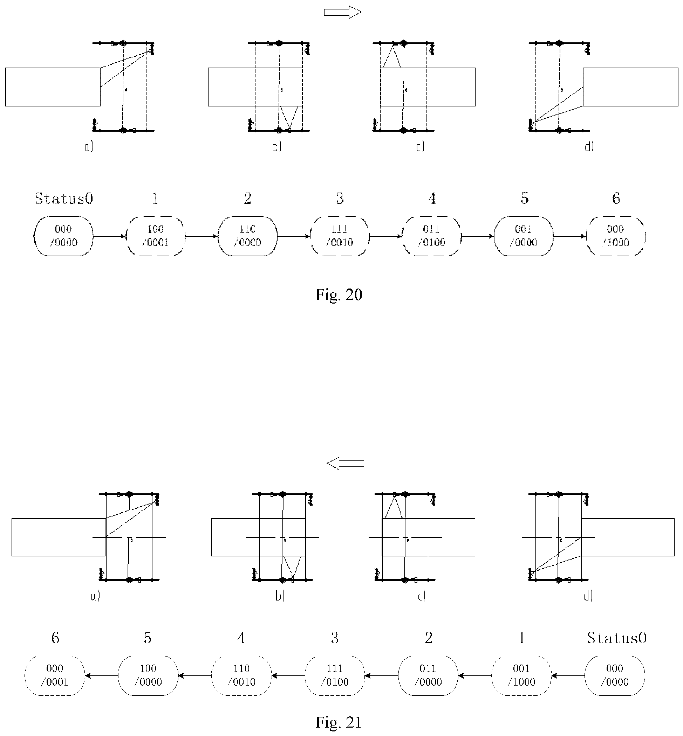

Fig. 19 is a schematic top view of an arrangement and structure of a container number acquisition system according to a tenth exemplary embodiment of the present disclosure, showing symmetrical arrangements of image acquiring units and sensors. Fig. 20 is a process schematic diagram showing capturing statuses of the container number acquisition system shown in Fig. 19, where the upper portion of Fig. 20 illustrates a relative movement between the container and the container number acquisition system and capturing time of the container number acquisition system, and the lower portion of Fig. 20 illustrates a schematic diagram of a capturing time and status transformation relation of the container number acquisition system shown in Fig. 19.

In Fig. 19, the system comprise three groups of sensors, for example, photosensors, which respectively has or defines signal paths L1, L2, L3, and four image acquiring units 11, 12, 13, 14, for example, video cameras; wherein a sensor status is set as S3S2S1, where S3, S2 and S1 correspond to L2, L1 and L3 respectively, an image acquiring unit operation status is set as C4C3C2C1, where C4, C3, C2 and C1 correspond to the image acquiring units 12, 14, 13 and 11 respectively; it is assumed that S=1 indicates that the signal path of the sensors is blocked, while S=0 indicates that the signal path of the sensors is unblocked or restored; it is also assumed that C=1 indicates the image acquiring unit performs one capturing operation; then a system status at any time may be represented as

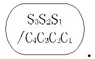

It is defined that a direction in which the container passes by the sensors S3, S2, S1 sequentially is a forward direction, while a direction in which the container passes by the sensors S1, S2, S3 sequentially is a reverse direction.

When symmetrical arrangements of sensors and image acquiring devices are applied, capturing times of container marks on four surface of a container may also be configured in symmetrical way for a bidirectional self-adaptive container number acquisition system, or may be in asymmetrical way.

The capturing time may be selected in overall consideration of following factors: a capturing angle of the image acquiring unit, a distance between the image acquiring unit and the surface of the container, capturing logic, requirements to anti-interference measures, and the like. The bidirectional self-adaptive container number acquisition system may also apply an asymmetrical arrangement and different capturing times.

No matter what arrangement is used, a set of capturing times may be determined based on the used arrangement. A plurality of capturing times may be selected for one arrangement, and there is only one optimal set of capturing times. The optimal capturing times are characterized in that:
no matter in which direction the container passes through the passageway, relative positions between the image acquiring unit and the container are fixed when capturing the container number at the same position, such that zooming and adjustment of other parameters of the image acquiring unit are not required when the container passes in forward and reverse directions; and
the capturing times are the same or symmetrical with respect to each other, and image acquiring units symmetrical with respect to each other may use the same one set of correction parameters, reducing workload in correction of images by the character recognition algorithm.

The symmetrical arrangement shown in Fig. 19 is taken as an example. Shown in Fig. 20 is a capturing time and status transformation relation when the container passes in the forward direction, and the dashed frames shown in the figures represent four capturing statuses.

In Fig. 20:
in Status0: a container has not yet entered a passageway, a sensor status is 000, an image acquiring unit status is 0000;
in Status1: a front edge of the container blocks L2, the sensor status is 100, the image acquiring unit status is 0001, and the image acquiring unit 11 performs one capturing operation at a corresponding capturing time a);
in Status2: the container blocks L1 and L2, the sensor status is 110, and the image acquiring unit status is 0000;
in Status3: the container blocks the sensors L3, L2 and L1, the sensor status is 111, the image acquiring unit status is 0010, and image acquiring unit 13performs one capturing operation at a corresponding capturing time b);
in Status4: L2 is restored, the sensor status is 011, the image acquiring unit status is 0100, and image acquiring unit 14 performs one capturing operation at a corresponding capturing time c);
in Status5: L1 is restored, the sensor status is 001, and the image acquiring unit status is 0000;and
in Status6: L3 is restored, the sensor status is 000, the image acquiring unit status is 1000, the image acquiring unit 12 performs one capturing operation at a corresponding capturing time d).

After the above statuses, the container passes through the passageway, and the sensors and the image acquiring units enter the Status0 again.

Fig. 21 is another process schematic diagram showing capturing statuses of the container number acquisition system shown in Fig. 19, where the upper portion of Fig. 21 illustrates a relative movement between the container and the container number acquisition system and capturing times of the container number acquisition system, and the lower portion of Fig. 21 illustrates a schematic diagram of a capturing time and status transformation relation of the container number acquisition system shown in Fig. 19.

In Fig. 21:
in Status0: a container has not yet entered a passageway, a sensor status is 000, and an image acquiring unit status is 0000;
in Status1: a front edge of the container blocks L3, the sensor status is 001, the image acquiring unit status is 1000, and the image acquiring unit 12 performs one capturing operation at a corresponding capturing time d);
in Status2: the container blocks L1 and L3, the sensor status is 011, and the image acquiring unit status is 0000;
in Status3: the container blocks sensors L1, L2 and L3, the sensor status is 111, the image acquiring unit status is 0100, and the image acquiring unit 14 performs one capturing operation at a corresponding capturing time c);
in Status4: L3 is restored, the sensor status is 110, the image acquiring unit status is 0010, and the image acquiring unit 13 performs one capturing operation at a corresponding capturing time b);
in Status5: L1 is restored, the sensor status is 100, and the image acquiring unit status is 0000;and
in Status6: L2 is restored, the sensor status is 000, the image acquiring unit status is 0001, and the image acquiring unit 11 performs one capturing operation at a corresponding capturing time a).

After the above statuses, the container passes through the passageway, and the sensors and the image acquiring units enter the Status0 again, waiting for entering of a next vehicle.

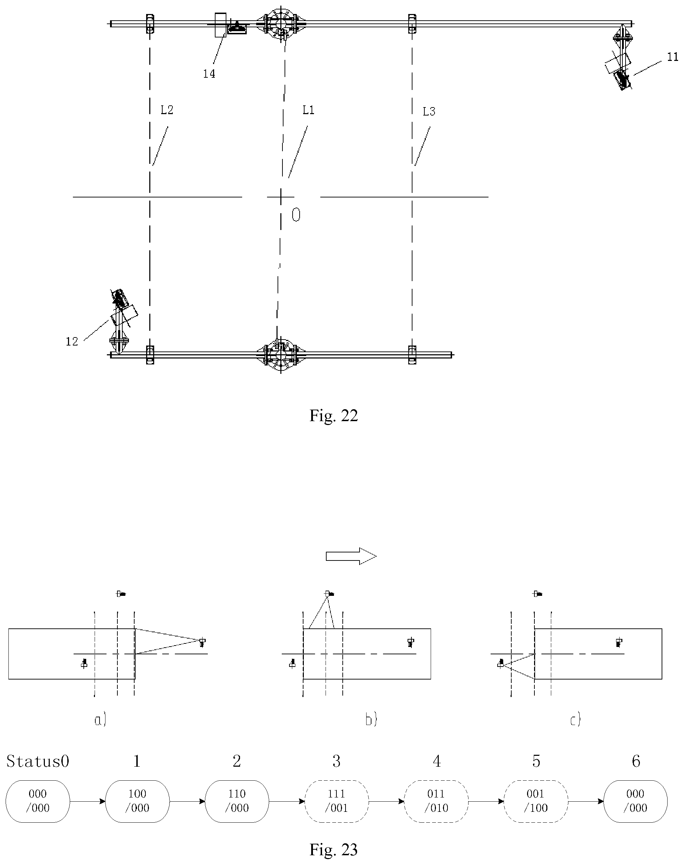

Fig. 22 is a schematic top view of an arrangement and structure of a container number acquisition system according to an eleventh exemplary embodiment of the present disclosure. Fig. 23 is a process schematic diagram showing capturing statuses of the container number acquisition system shown in Fig. 22, where the upper portion of Fig. 23 illustrates a relative movement between the container and the container number acquisition system and capturing times of the container number acquisition system, and the lower portion of Fig. 23 illustrates a schematic diagram of a capturing time and status transformation relation of the container number acquisition system shown in Fig. 22.

In Fig. 22, the system comprise three groups of sensors, for example, photosensors, respectively having or defining signal paths L1, L2, L3, and three image acquiring units 11, 12, 14, for example, video cameras; wherein a sensor status is set as S3S2S1, where S3, S2 and S1 correspond to L2, L1 and L3 respectively, an image acquiring unit operation status is set as C3C2C1, where C3, C2 and C1 correspond to the image acquiring units 12, 14 and 11 respectively; it is assumed that S=1 indicates that the signal path of the sensors is blocked, while S=0 indicates that the signal path of the sensors is unblocked or restored; it is also assumed that C=1 indicates the image acquiring unit performs one capturing operation; then a system status at any time may be represented as

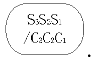

It is defined that a direction in which the container passes by the sensors S3, S2, S1 sequentially is a forward direction, while a direction in which the container passes by the sensors S1, S2, S3 sequentially is a reverse direction.

The arrangement shown in Fig. 22 is taken as an example. Shown in Fig. 23 is a capturing time and status transformation relation when the container passes in the forward direction, and the dashed frames shown in the figures represent three capturing statuses.

In Fig. 23:
in Status0: a container has not yet entered a passageway, the sensor status is 000, and the image acquiring unit status is 000;
in Status1: a front edge of the container blocks L2, the sensor status is 100, and the image acquiring unit status is 000;
in Status2: the container blocks L1 and L2, the sensor status is 110, and the image acquiring unit status is 000;
in Status3: the container blocks sensor L3, L2, L1, the sensor status is 111, the image acquiring unit status is 001, the image acquiring unit 11 performs one capturing operation at a corresponding capturing time a);
in Status4: L2 is restored, the sensor status is 011, the image acquiring unit status is 010, and the image acquiring unit 14 performs one capturing operation at a corresponding capturing time b);
in Status5: L1 is restored, the sensor status is 001, the image acquiring unit status is 100, the image acquiring unit 12 performs one capturing operation at a corresponding capturing time c); and
in Status6: L3 is restored, the sensor status is 000, and the image acquiring unit status is 000.

After the above statuses, the container passes through the passageway, and the sensors and the image acquiring units enter the Status0 again, waiting for entering of a next vehicle.

Fig. 24 is another process schematic diagram showing capturing statuses of the container number acquisition system shown in Fig. 22, where the upper portion of Fig. 24 illustrates a relative movement between the container and the container number acquisition system, and capturing times of the container number acquisition system, and the lower portion of Fig. 24 illustrates a schematic diagram of a capturing time and status transformation relation of the container number acquisition system shown in Fig. 22, where dashed frames represents three capturing status.

In Fig. 24:
in Status0: a container has not yet entered a vehicle-mounted detection passageway, the sensor status is 000, and the image acquiring unit status is 000;
in Status1: a front edge of the container blocks L3, the sensor status is 001, and the image acquiring unit status is 000;
in Status2: the container blocks L1 and L3, the sensor status is 011, the image acquiring unit status is 100, and the image acquiring unit 12 performs one capturing operation at a corresponding capturing time c);
in Status3: the container blocks sensor L1, L2 and L3, the sensor status is 111, the image acquiring unit status is 010, and the image acquiring unit 14performs one capturing operation at a corresponding capturing time b);
in Status4: L3 is restored, the sensor status is 110, the image acquiring unit status is 001, and the image acquiring unit 11 performs one capturing operation at a corresponding capturing time a);
in Status5: L1 is restored, the sensor status is 100, and the image acquiring unit status is 000; and
in Status6: L2 is restored, the sensor status is 000, and the image acquiring unit status is 000.

After the above statuses, the sensors and the image acquiring units enter the Status0 again, waiting for entering of a next vehicle.

Whether the container passes in the forward direction or in the reverse direction, a direction in which a next vehicle enters the passageway will not be limited.

With the symmetrical arrangement, whether the container passes in the forward direction or in the reverse direction, a capturing angle and a capturing distance of the image acquiring unit 11 are substantially the same as those of the image acquiring unit 12, and a capturing angle and a capturing distance of the image acquiring unit 13 are substantially the same as those of the image acquiring unit 14, such that images captured by the image acquiring units may be corrected by using the character recognition algorithm with the same set of correction parameters.

The method of identifying a container number has been described above, and correspondingly, embodiments of the present disclosure provide a system of identifying a container number, comprising:
an image acquiring device arranged along a passageway through which a container will pass, the image acquiring device comprising a trigger unit and a plurality of image acquiring units, at least two image acquiring units of the plurality of image acquiring units being adapted to respectively acquire images of the container numbers on at least two surfaces of a plurality of surfaces of the container passing through the passageway based on a signal from the trigger unit; and
number identification device configured to identify the container number at least based on the images or data about the container number from the at least two image acquiring units.

As such, the images of the container numbers on the at least two surfaces of the container are acquired by the image acquiring units based on the trigger signal from the trigger unit, and container number characters are extracted from one or more of the acquired imaged by using a character recognition algorithm. The images of the container number of the same container captured by the image acquiring device are obtained at different positions and capturing angles with respect to the container, recognition results are obtained respectively from the images through the character recognition algorithm, and then a vote is taken on the results so as to obtain the result having the greatest correctness. As is known, there is the same container number on all surfaces of the container, that is, even if the container number on one surface cannot be completely identified due to being soiled, broken, blocked or incomplete, identification may also be made based on a complete container number on another surface, or by combining container numbers on at least two surfaces (for example, different portions of the numbers on two surfaces are soiled or broken, that is, a portion of the number on one surface is soiled or broken, while a corresponding portion of the number on the other surface is complete, so a complete number may be obtained by replacing the soiled or broken portion of the number on the one surface with the corresponding complete portion of the number on the other surface), thereby the container number of the container can be accurately obtained in case the container goes through the passageway in a single pass, that is, obtaining images of numbers of the same container at various positions will facilitate improvement in accuracy of the recognition result.

Optionally, in the above system, a distance between projections of the at least two image acquiring units in the movement direction of the container relative to the passageway is less than the length of the container. Since the distance between the image acquiring units in the movement direction is less than the length of the container, the length of the passageway may be set to be less than the length of the container, thereby saving an arrangement space.

Further, the at least two image acquiring units are positioned such that a relative position of each of the at least two image acquiring units with respect to a corresponding one of the surfaces of the container is fixed in two opposite movement directions of the container relative to the passageway when acquiring the image of the container number on the corresponding surface. In other words, no matter in which direction the container passes through the passageway, relative positions between a video camera and the container are fixed when capturing the container number at the same position, and zooming and adjustment of other parameters of the video camera are not required when the container passes in forward and reverse directions. As such, the present disclosure provides a bidirectional self-adaptive container number acquisition system. That is, no matter in which direction the container passes through the passageway in a relative way, a photo of a portion of the container spray coated with number marking can be acquired accurately, thereby enabling acquiring the container number. Based on the container number, the method of the present disclosure can determine types and numbers of the containers passing through the passageway, and obtain dimension codes and container type codes of the containers. With the bidirectional self-adaptive container number acquisition system, the movement direction of the container relative to the passageway is not limited. Particularly, when attached to an X-ray container inspection system, the bidirectional self-adaptive container number acquisition system is mounted onto a fixed passageway or is provided on a carrying vehicle; when a bidirectional inspection is performed by the X-ray container inspection system so as to increase throughput rate of containers, the container number acquisition system can container numbers synchronously.

Optionally, as shown in Fig. 2, the trigger unit comprises a first group of sensors including a first signal transmitter portion 21a and a first signal receiving portion 21b located on either side of the container in a direction perpendicular to the movement direction; the at least two image acquiring units comprise a first image acquiring unit 11 and a second image acquiring unit 12 adapted to respectively acquire images of the container numbers on a front surface and a rear surface of the container, the first image acquiring unit and the second image acquiring unit being respectively located on either side of a first signal path of the first group of sensors. Further, a midpoint of a connection line between the first image acquiring unit 11 and the second image acquiring unit 12 is also a midpoint of the first signal path.

Optionally, as shown in Fig. 4, the trigger unit comprises a second group of sensors and a third group of sensors arranged to space apart from each other in the movement direction of the container relative to the passageway, the second group of sensors including a second signal transmitter portion 22a and a second signal receiving portion 22b located on either side of the container in the direction perpendicular to the movement direction, the third group of sensors including a third signal transmitter portion 23a and a second signal receiving portion 23b located on either side of the container in the direction perpendicular to the movement direction; the at least two image acquiring units comprise a first image acquiring unit 11 and a second image acquiring unit 12 adapted to respectively acquire images of the container numbers on the front surface and the rear surface of the container, the first image acquiring unit 11 and the second image acquiring unit 12 being respectively located on either side of a first signal path of the first group of sensors. Further, As shown in Figs. 6-7d, the at least two image acquiring units further comprises the third image acquiring unit 13 adapted to acquire an image of a container number on one side surface of the container. Still further, the at least two image acquiring units further comprises the fourth image acquiring unit 14 adapted to acquire an image of a container number on another side surface of the container. In an optional example, a midpoint of a connection line between the first image acquiring unit 11 and the second image acquiring unit 12 is also a midpoint of a connection line between the third image acquiring unit and 13 the fourth image acquiring unit 14.

As shown in Figs. 8-9d, 12-15c, the trigger unit further comprises a first group of sensors including a first signal transmitter portion 21a and a first signal receiving portion 21b located on either side of the container in a direction perpendicular to the movement direction, the first group of sensors being located between the second group of sensors and the third group of sensors in the movement direction of the container; the at least two image acquiring units may further comprise the third image acquiring unit 13 adapted to acquire an image of a container number on one side surface of the container, and/or the fourth image acquiring unit 14 adapted to acquire an image of a container number on another side surface of the container. Further, as shown in Figs. 8-9d, the first group of sensors is located at an intermediate position between the second group of sensors and the third group of sensors in the movement direction; and a midpoint of a connection line between the first image acquiring unit and the second image acquiring unit is also a midpoint of a connection line between the third image acquiring unit and the fourth image acquiring unit and a midpoint of the first signal path.

In the container number acquisition system of the present disclosure, the symmetrical arrangement of the first image acquiring unit and the second image acquiring unit and/or the symmetrical arrangement of the third image acquiring unit and the fourth image acquiring unit enables capturing times to be the same or symmetrical with respect to each other, such that image acquiring units arranged to be symmetrical with respect to each other may use the same set of correction parameters, thereby reducing workload in correcting the image by the character recognition algorithm. In an example, for example, as shown in Figs. 5a and 5b, the first image acquiring unit 11 and the second image acquiring unit 12 capture images at the same capturing distance and angle. As such, the position of the captured character in the image and a distortion of the character due to use of lens are identical for the two image acquiring units. For each distorted character, the image algorithm needs a set of correction parameters to correct the image of the character and then recognize the character. The correction parameters need to be used for image acquiring units at different positions one by one. It is found that if a symmetrical arrangement is used, correction parameters calibrated and generated through one camera may be used for the first image acquiring unit 11 and the second image acquiring unit 12, thereby reducing workload of calibration. Otherwise, if no symmetrical arrangement is used, correction needs to be made for all image acquiring unit because the capturing angles and distances of respective image acquiring units are not consistent with each other. In addition, if the capturing times are not the same or symmetrical with respect to each other when the container passes through the passageway in forward and reverse directions, it is required to add an automatic focusing operation for the image acquiring unit, and there may be not enough time to finish the automatic focusing operation when the container passes at a high speed, thereby resulting in out of focus of the image.

As shown in Fig. 17, the at least two image acquiring units comprise one image acquiring unit 11 (12) adapted to acquire an image of a container number on one of a front surface, a rear surface, side surfaces, and a top surface of a container, and another image acquiring unit 13 (14) adapted to acquire an image of a container number on another one of the front surface, the rear surface, the side surfaces, and the top surface of the container; the trigger unit comprises a group of sensors, and the one image acquiring unit and the another image acquiring unit may be triggered at the same time based on signals from the group of sensors.

As shown in Figs. 18-19, the at least two image acquiring units comprise one image acquiring unit 11 adapted to acquire an image of a container number on one of a front surface, a rear surface, side surfaces, and a top surface of a container, and another image acquiring unit 13 adapted to acquire an image of a container number on another one of the front surface, the rear surface, the side surfaces, and the top surface of the container; the trigger unit comprises two groups of sensors 22, 23, and the one image acquiring unit and the another image acquiring unit may be triggered at the same time based on signals from the two groups of sensors; each group of sensors includes a signal transmitter portion and a signal receiving portion located on either side of the container in a direction perpendicular to the movement direction of the container relative to the passageway.

Although several exemplary embodiments incorporating principles of the present invention have been shown and described above, the present invention is not limited to the disclosed embodiments. Rather, the present applicant is intended to cover any changes, uses or modifications by using general principles of the present invention. Further, the present invention is intended to cover contents departing from the present disclosure and falling within known or customary means in the field to which the present invention pertains.

## Claims

1. A method of identifying a container number, comprising steps of:
arranging an image acquiring device along a passageway through which a container passes, the image acquiring device comprising a trigger unit and a plurality of image acquiring units, at least two image acquiring units of the plurality of image acquiring units being adapted to respectively acquire images of container numbers on at least two surfaces of a plurality of surfaces of the container passing through the passageway;
acquiring the images of the container numbers on the at least two surfaces respectively by the at least two image acquiring units based on a signal from the trigger unit; and
identifying the container number at least based on the images or data from the at least two image acquiring units about the container number.

2. The method according to claim 1, comprising:
acquiring the images of the container numbers on the at least two surfaces of the plurality of surfaces respectively by the at least two image acquiring units of the plurality of image acquiring units at different times based on the signal from the trigger unit,
wherein a distance between projections of the at least two image acquiring units in a movement direction of the container relative to the passageway is less than the length of the container.

3. The method according to claim 2, wherein:
the at least two image acquiring units are positioned such that a relative position of each of the at least two image acquiring units with respect to a corresponding one of the surfaces of the container is fixed in two opposite movement directions of the container relative to the passageway when acquiring the image of the container number on the corresponding surface.

4. The method according to claim 2 or 3, wherein:
the trigger unit comprises a first group of sensors including a first signal receiving portion configured to sense a position of the container relative to the passageway;
the at least two image acquiring units comprise a first image acquiring unit and a second image acquiring unit adapted to respectively acquire images of the container numbers on a front surface and a rear surface of the container;
the step of "acquiring the images of the container numbers on the at least two surfaces of the plurality of surfaces respectively by the at least two image acquiring units of the plurality of image acquiring units at different times based on the signal from the trigger unit" comprises:
acquiring the image of the container number on one of the front surface and the rear surface of the container by a corresponding one of the first image acquiring unit and second image acquiring unit, when a first signal path of the first group of sensors begins to be blocked by the one of the front surface and the rear surface; and
acquiring the image of the container number on the other of the front surface and the rear surface of the container by the other one of the first image acquiring unit and second image acquiring unit, when the other of the front surface and the rear surface of the container departs away from the first signal path of the first group of sensors so that the first signal path is restored.

5. The method according to claim 4, wherein:
a midpoint of a connection line between the first image acquiring unit and the second image acquiring unit is a midpoint of the first signal path.

6. The method according to claim 2 or 3, wherein:
the trigger unit comprises a second group of sensors and a third group of sensors arranged to space apart from each other in the movement direction, the second group of sensors including a second signal receiving portion configured to sense a position of the container relative to the passageway, the third group of sensors including a third signal receiving portion configured to sense the position of the container relative to the passageway;
the at least two image acquiring units comprise a first image acquiring unit and a second image acquiring unit adapted to respectively acquire images of the container numbers on a front surface and a rear surface of the container;
the step of "acquiring the images of the container numbers on the at least two surfaces of the plurality of surfaces respectively by the at least two image acquiring units of the plurality of image acquiring units at different times based on the signal from the trigger unit" comprises:
acquiring the image of the container number on one of the front surface and the rear surface of the container by a corresponding one of the first image acquiring unit and second image acquiring unit, when a second signal path of the second group of sensors begins to be blocked by the one of the front surface and the rear surface; and
acquiring the image of the container number on the other of the front surface and the rear surface of the container by the other one of the first image acquiring unit and second image acquiring unit, when the other of the front surface and the rear surface departs away from a third signal path of the third group of sensors so that the third signal path is restored.

7. The method according to claim 6, wherein:
the at least two image acquiring units further comprises a third image acquiring unit adapted to acquire an image of a container number on one side surface of the container;
the step of "acquiring the images of the container numbers on the at least two surfaces of the plurality of surfaces respectively by the at least two image acquiring units of the plurality of image acquiring units at different times based on the signal from the trigger unit" further comprises:
acquiring the image of the container number on the one side surface by the third image acquiring unit when the third signal path of the third group of sensors begins to be blocked by the one of the front surface and the rear surface of the container.

8. The method according to claim 7, wherein:
the at least two image acquiring units further comprises a fourth image acquiring unit adapted to acquire an image of a container number on another side surface of the container;
the step of "acquiring the images of the container numbers on the at least two surfaces of the plurality of surfaces respectively by the at least two image acquiring units of the plurality of image acquiring units at different times based on the signal from the trigger unit" further comprises:
acquiring the image of the container number on the another side surface by the fourth image acquiring unit when the one of the front surface and the rear surface of the container departs away from the second signal path of the second group of sensors so that the second signal path is restored.

9. The method according to claim 8, wherein:
a midpoint of a connection line between the first image acquiring unit and the second image acquiring unit is also a midpoint of a connection line between the third image acquiring unit and the fourth image acquiring unit.

10. The method according to claim 6, wherein:
the trigger unit further comprises a first group of sensors including a first signal receiving portion configured to sense the position of the container relative to the passageway, the first group of sensors being located between the second group of sensors and the third group of sensors in the movement direction;
the at least two image acquiring units further comprises a third image acquiring unit adapted to acquire an image of a container number on one side surface of the container and a fourth image acquiring unit adapted to acquire an image of a container number on another side surface of the container;
the step of "acquiring the images of the container numbers on the at least two surfaces of the plurality of surfaces respectively by the at least two image acquiring units of the plurality of image acquiring units at different times based on the signal from the trigger unit" further comprises:
acquiring the image of the container number on the one side surface by the third image acquiring unit when a first signal path of the first group of sensors begins to be blocked by one of the front surface and the rear surface of the container; and
acquiring the image of the container number on the another side surface by the fourth image acquiring unit when the other of the front surface and the rear surface of the container departs away from the first signal path so that the first signal path of the first group of sensors is restored.

11. The method according to claim 10, wherein:
the first group of sensors is located at an intermediate position between the second group of sensors and the third group of sensors in the movement direction; and
a midpoint of a connection line between the first image acquiring unit and the second image acquiring unit is also a midpoint of a connection line between the third image acquiring unit and the fourth image acquiring unit and a midpoint of the first signal path.

12. The method according to claim 2, wherein:
the trigger unit comprises a second group of sensors and a third group of sensors arranged to space apart from each other in the movement direction, the second group of sensors including a second signal receiving portion configured to sense a position of the container relative to the passageway, the third group of sensors including a third signal receiving portion configured to sense the position of the container relative to the passageway;
the at least two image acquiring units comprise a first image acquiring unit and a second image acquiring unit adapted to respectively acquire images of the container numbers on a front surface and a rear surface of the container;
the at least two image acquiring units further comprises a third image acquiring unit adapted to acquire an image of a container number on one side surface of the container and a fourth image acquiring unit adapted to acquire an image of a container number on another side surface of the container;
the step of "acquiring the images of the container numbers on the at least two surfaces of the plurality of surfaces respectively by the at least two image acquiring units of the plurality of image acquiring units at different times based on the signal from the trigger unit" comprises:
acquiring the image of the container number on the one side surface by the third image acquiring unit and acquiring the image of the container number on one of the front surface and the rear surface of the container by a corresponding one of the first image acquiring unit and second image acquiring unit, when a third signal path of the third group of sensors begins to be blocked by the one of the front surface and the rear surface; and
acquiring the image of the container number on the another side surface by the fourth image acquiring unit and acquiring the image of the container number on the other of the front surface and the rear surface of the container by the other one of the first image acquiring unit and second image acquiring unit, when the other of the front surface and the rear surface departs away from a second signal path of the second group of sensors so that the second signal path is restored.

13. The method according to claim 2, wherein:
the trigger unit comprises a second group of sensors and a third group of sensors arranged to space apart from each other in the movement direction, the second group of sensors including a second signal receiving portion configured to sense a position of the container relative to the passageway, the third group of sensors including a third signal receiving portion configured to sense the position of the container relative to the passageway;
the at least two image acquiring units comprise a first image acquiring unit and a second image acquiring unit adapted to respectively acquire images of the container numbers on a front surface and a rear surface of the container;
the trigger unit further comprises a first group of sensors including a first signal receiving portion configured to sense the position of the container relative to the passageway, the first group of sensors being located between the second group of sensors and the third group of sensors in the movement direction;
the at least two image acquiring units further comprises a third image acquiring unit adapted to acquire an image of a container number on one side surface of the container and a fourth image acquiring unit adapted to acquire an image of a container number on another side surface of the container;
the step of "acquiring the images of the container numbers on the at least two surfaces of the plurality of surfaces respectively by the at least two image acquiring units of the plurality of image acquiring units at different times based on the signal from the trigger unit" comprises:
acquiring the image of the container number on the one side surface by the third image acquiring unit and acquiring the image of the container number on one of the front surface and the rear surface of the container by a corresponding one of the first image acquiring unit and second image acquiring unit, when a third signal path of the third group of sensors begins to be blocked by the one of the front surface and the rear surface;
acquiring the image of the container number on the another side surface by the fourth image acquiring unit, when the other of the front surface and the rear surface of the container departs away from a second signal path of the second group of sensors so that the second signal path is restored; and
acquiring the image of the container number on the other of the front surface and the rear surface of the container by the other corresponding one of the first image acquiring unit and second image acquiring unit, when the other of the front surface and the rear surface departs away from a first signal path of the first group of sensors so that the first signal path is restored.

14. The method according to any one of claims 1 to 13, wherein the step of arranging an image acquiring device comprises providing a carrying vehicle, which defines the passageway and on which the image acquiring device is arranged.

15. The method according to any one of claims 1 to 14, wherein the trigger unit is configured to generate the signal based on a relative movement between the container and the passageway.

16. A system of identifying a container number, comprising:
an image acquiring device arranged along a passageway through which a container passes, the image acquiring device comprising a trigger unit and a plurality of image acquiring units, at least two image acquiring units of the plurality of image acquiring units being adapted to respectively acquire images of container numbers on at least two surfaces of a plurality of surfaces of the container passing through the passageway; and
a number identification device configured to identify the container number at least based on the images or data from the at least two image acquiring units about the container number, wherein
a distance between projections of the at least two image acquiring units in a movement direction of the container relative to the passageway is less than the length of the container.

17. The system according to claim 16, wherein
the length of the container is a length of a standard short container.

18. The system according to claim 16, wherein:
a relative position of each of the at least two image acquiring units with respect to a corresponding one of the surfaces of the container is fixed in two opposite movement directions when acquiring the image of the container number on the corresponding surface.

19. The system according to any one of claims 16 to 18, wherein:
the trigger unit comprises a first group of sensors including a first signal receiving portion configured to sense a position of the container relative to the passageway;
the at least two image acquiring units comprise a first image acquiring unit and a second image acquiring unit adapted to respectively acquire images of the container numbers on a front surface and a rear surface of the container, the first image acquiring unit and the second image acquiring unit being located on either side of a first signal path of the first group of sensors respectively.

20. The system according to claim 19, wherein:
a midpoint of a connection line between the first image acquiring unit and the second image acquiring unit is a midpoint of the first signal path.

21. The system according to any one of claims 16 to 18, wherein:
the trigger unit comprises a second group of sensors and a third group of sensors arranged to space apart from each other in the movement direction, the second group of sensors including a second signal receiving portion configured to sense a position of the container relative to the passageway, the third group of sensors including a third signal receiving portion configured to sense the position of the container relative to the passageway;
the at least two image acquiring units comprise a first image acquiring unit and a second image acquiring unit adapted to respectively acquire images of the container numbers on a front surface and a rear surface of the container, the first image acquiring unit and the second image acquiring unit being located on either side of a first signal path of the first group of sensors respectively.

22. The system according to claim 21, wherein:
the at least two image acquiring units further comprises a third image acquiring unit adapted to acquire an image of a container number on one side surface of the container.

23. The system according to claim 22, wherein:
the at least two image acquiring units further comprises a fourth image acquiring unit adapted to acquire an image of a container number on another side surface of the container.

24. The system according to claim 23, wherein:
a midpoint of a connection line between the first image acquiring unit and the second image acquiring unit is also a midpoint of a connection line between the third image acquiring unit and the fourth image acquiring unit.

25. The system according to claim 21, wherein:
the trigger unit further comprises a first group of sensors including a first signal receiving portion configured to sense the position of the container relative to the passageway, the first group of sensors being located between the second group of sensors and the third group of sensors in the movement direction of the container;
the at least two image acquiring units further comprises a third image acquiring unit adapted to acquire an image of a container number on one side surface of the container and a fourth image acquiring unit adapted to acquire an image of a container number on another side surface of the container.

26. The system according to claim 25, wherein:
the first group of sensors is located at an intermediate position between the second group of sensors and the third group of sensors in the movement direction; and
a midpoint of a connection line between the first image acquiring unit and the second image acquiring unit is also a midpoint of the first signal path and a midpoint of a connection line between the third image acquiring unit and the fourth image acquiring unit.

27. The system according to any one of claims 16-26, wherein the system further comprises a carrying vehicle, which defines the passageway and on which the image acquiring device is arranged.

28. The system according to any one of claims 16 to 27, wherein the trigger unit is configured to generate a signal based on a relative movement between the container and the passageway.
